# EUROPÄISCHE PATENTSCHRIFT

(11) **EP 3 293 434 B1**
(45) Veröffentlichungstag und Bekanntmachung des Hinweises auf die Patenterteilung: **20.03.2019**
(21) Anmeldenummer: 17187489.4
(22) Anmeldetag: 23.08.2017
(51) Int. Cl.: F16M 11/04, F16M 13/02, A47B 57/06

(54) **TRAGSÄULENSYSTEM ZUM TRAGEN WENIGSTENS EINER COMPUTEREINRICHTUNG**
SUPPORT COLUMN SYSTEM FOR SUPPORTING AT LEAST ONE COMPUTER DEVICE
SYSTÈME DE COLONNES DE SOUTIEN DESTINÉ À SUPPORTER AU MOINS UN ORDINATEUR

(30) Priorität: 08.09.2016 DE 102016116831
(43) Veröffentlichungstag der Anmeldung: 14.03.2018
(73) Patentinhaber: Bernstein AG, 32457 Porta Westfalica (DE)
(72) Erfinder: Diekröger, Uwe, 32469 Petershagen (DE)
(74) Vertreter: Gramm, Lins & Partner Patent- und Rechtsanwälte PartGmbB

(56) Entgegenhaltungen:
- WO-A1-2014/133915
- DE-A1- 3 402 885
- DE-A1-102006 019 198
- DE-U1-202014 008 061
- US-A1- 2014 034 799

## Beschreibung

Die Erfindung betrifft ein Tragsäulensystem zum Tragen wenigstens einer Computereinrichtung, wobei das Tragsäulensystem folgendes aufweist:
a) wenigstens eine zur vertikalen Montage eingerichtete längliche Tragsäule,
b) wenigstens ein Vertikalbefestigungsmittel, das zur vertikalen Befestigung der Tragsäule an einem Fußboden, einer Decke oder einer Wand eines Raum oder zur Befestigung an einer Rollenplattform eingerichtet ist,
c) wenigstens eine an der Tragsäule befestigte erste Trageinrichtung zum Tragen wenigstens eines visuellen Ausgabegerätes der Computereinrichtung,
d) wenigstens eine an der Tragsäule befestigte zweiten Trageinrichtung zum Tragen wenigstens eines manuellen Eingabegerätes der Computereinrichtung.

Tragsäulensysteme zum Tragen einer Computereinrichtung sind bekannt, z.B. aus der US 8,191,487 B2. Solche bekannten Tragsäulensysteme erfüllen nicht immer alle Anforderungen für den Einsatz in industriellen Produktionsstätten, insbesondere hinsichtlich Robustheit, universeller Funktionalität und Unempfindlichkeit gegen Umgebungsbedingungen. Aus der DE 3402885 A1 ist eine freistehende Versorgungssäule für medizinische Zwecke und eine Halterung bekannt. Aus der US 2014/0034799 A1 ist eine verstellbare Halterung bekannt. Aus der WO 2014/133915 A1 ist eine mobile Computer-Arbeitsstation bekannt.

Der Erfindung liegt die Aufgabe zugrunde, ein Tragsäulensystem zum Tragen wenigstens einer Computereinrichtung anzugeben, das den Anforderungen beim Einsatz in industriellen Produktionsstätten besser gerecht wird.

Diese Aufgabe wird mit einem Tragsäulensystem gemäß Anspruch 1 gelöst. Dies beinhaltet, dass die Tragsäule wenigstenseinen Durchbruch in einer von außen zugänglichen Wand aufweist und durch den Durchbruch wenigstens ein Funktionselement hindurch geführt ist, wobei wenigstens eine Funktionsblende in oder an dem Durchbruch befestigt ist und den Durchbruch abdeckt und das wenigstens eine Funktionselement über die wenigstens eine Funktionsblende in abgedichteter Weise durch den Durchbruch hindurch geführt ist. Ein Funktionselement kann z.B. ein manuelles Bedienelement, ein visuelles Anzeigeelement oder ein Kabel sein. Dies hat den Vorteil, dass neben den eigentlichen Bedien- und Ausgabeelementen der Computereinrichtung ein zusätzliches Funktionselement an einer für den Benutzer der Computereinrichtung gut zugänglichen Stelle angeordnet werden kann. Das Funktionselement kann zudem direkt an der Tragsäule angeordnet werden und ist somit robust und sicher befestigt. Es müssen nicht zusätzliche Halterungen an der Tragsäule angeordnet werden. Durch die abgedichtete Anordnung der Funktionsblende an oder in dem Durchbruch können zudem die angestrebten Dichtigkeitserfordernisse des Tragsäulensystems aufrechterhalten werden, z.B. eine Erfüllung der IP65-Anforderungen.

Somit kann durch Anbringen einer Funktionsblende nach Wunsch ein manuelles Bedienelement, ein visuelles Anzeigeelement oder ein Kabel oder auch mehrere dieser Elemente, auch in Kombination miteinander, an einer geeigneten Stelle direkt an der Tragsäule befestigt werden. Das manuelle Bedienelement kann z.B. ein Taster oder Schalter sein, z.B. ein Not-Aus-Betätigungselement, durch dessen Betätigung die Computereinrichtung oder eine mit der Computereinrichtung verbundene Anlage im Notfall schnell abgeschaltet werden kann. Das visuelle Anzeigeelement kann z.B. eine Signalleuchte sein. Das manuelle Bedienelement kann auch kombiniert mit einem visuellen Anzeigeelement ausgebildet sein, indem z.B. eine Signalleuchte in einem Schalter oder Taster integriert ist. Durch die Möglichkeit der Hindurchführung eines Kabels oder mehrerer Kabel durch den Durchbruch in der Wand der Tragsäule können beispielsweise die Teile der Computereinrichtung, wie z.B. das visuelle Ausgabegerät und/oder das manuelle Eingabegerät, ohne aufwendige Kabelverlegung angeschlossen werden. Die Kabel können im Inneren der Tragsäule, z.B. in einer geschlossenen Kammer eines Mehrkammerprofils der Tragsäule, zum oberen oder unteren Ende der Tragsäule geführt werden, insbesondere hin zum Vertikalbefestigungsmittel, und dort über andere Wege weitergeführt werden, wie z.B. einen Kabeltunnel oder einen Kabelkanal im Bereich des Fußbodens, der Decke oder einer Wand.

Die Funktionsblende kann insbesondere als wechselbare Funktionsblende ausgebildet sein. Auf diese Weise kann die Tragsäule durch Wechseln einer Funktionsblende an andere Funktionen und Aufgaben angepasst werden.

Die Funktionsblende kann z.B. über Rastmittel verfügen, z.B. Rastnasen, mit denen die Funktionsblende schnell und einfach in oder an dem Durchbruch befestigt werden kann. Zusätzlich kann die Funktionsblende eine umlaufende Dichtung aufweisen, um die gewünschte Abdichtung gegenüber dem Durchbruch zu ermöglichen. Gemäß der Erfindung ist vorgesehen, dass die Funktionsblende an einer Frontseite oder einer Rückseite der Tragsäule angeordnet ist. Durch die Anbringung der Funktionsblende an einer Frontseite der Tragsäule wird insbesondere die Anbringung von manuellen Bedienelementen begünstigt, die von einem Bediener schnell erreichbar sein müssen, wie z.B. das erwähnte Not-Aus-Betätigungselement. Zudem können visuelle Anzeigeelemente damit an einer Position an der Tragsäule angeordnet werden, an der sie vom Benutzer leicht wahrgenommen werden können. Die Anbringung der Funktionsblende an einer Rückseite der Tragsäule hat den Vorteil, dass insbesondere für die Kabelverlegung eine Anordnung der Kabel ermöglicht wird, die für den Benutzer wenig störend ist und den optischen Gesamteindruck des Tragsäulensystems nicht stört.

Gemäß der Erfindung ist vorgesehen, dass die Funktionsblende wenigstens eine schräg zur Längsachse der Tragsäule verlaufende Durchführungswand zur Durchführung eines Kabels oder mehrere zickzackförmig schräg angeordnete Durchführungswände aufweist. Die Durchführungswand oder die Durchführungswände bilden somit Belegflächen, die nach Wunsch mit einem oder mehreren Funktionselementen belegt werden können. Die schräge Anordnung hat insbesondere für die Verlegung von Kabeln den Vorteil, dass diese nicht rechtwinklig aus der Standsäule austreten, sondern mit einer entsprechenden Schräge, wobei insbesondere bei mehreren zickzackförmig angeordneten Durchführungswänden eine Auswahlmöglichkeit besteht, ob das Kabel schräg nach oben oder schräg nach unten aus der Tragsäule austreten soll.

Die Schräge der Durchführungswand oder der Durchführungswände kann z.B. im Winkel von etwa 45 Grad zur Längsachse der Tragsäule ausgerichtet sein. Die Funktionsblende kann außer den mit den Durchführungswänden belegten Bereichen auch ebene Oberflächenbereiche haben, die im Wesentlichen parallel zur Längsachse der Tragsäule verlaufen. Weist die Funktionsblende keine solche schräg zur Längsachse der Tragsäule verlaufende Durchführungswand auf, so ist ihre gesamte Oberfläche beispielsweise eben ausgebildet, z.B. parallel zur Längsachse der Tragsäule.

Gemäß einer vorteilhaften Weiterbildung der Erfindung ist vorgesehen, dass die Funktionsblende einen Befestigungsrahmen aufweist, der hinsichtlich seiner Dimensionen an die Dimensionen des Durchbruchs angepasst ist. Auf diese Weise passt sich die Funktionsblende besonders gut in den Durchbruch ein, was optische Vorteile hat und die gewünschte Abdichtung zwischen der Funktionsblende und dem Durchbruch vereinfacht. So kann z.B. ein Dichtring an der Funktionsblende angeordnet sein, der um den Befestigungsrahmen herum verläuft. Der Befestigungsrahmen kann insbesondere einstückig mit der Funktionsblende ausgebildet sein.

Gemäß einer vorteilhaften Weiterbildung der Erfindung ist vorgesehen, dass die Tragsäule vollständig oder überwiegend aus Metall besteht. Auf diese Weise wird eine robuste Tragsäule bereitgestellt. Die Tragsäule kann insbesondere das erwähnte Mehrkammerprofil aufweisen. Die Tragsäule kann z.B. als Strangpress-Profilteil bereitgestellt werden, z.B. aus Aluminium.

Gemäß einer vorteilhaften Weiterbildung der Erfindung ist vorgesehen, dass die Funktionsblende vollständig oder überwiegend aus Kunststoff besteht. Dies hat den Vorteil, dass die Funktionsblende einfach und kostengünstig in großen Stückzahlen hergestellt werden kann, z.B. durch einen Kunststoffspritz- und/oder Gießprozess. Zudem kann die Funktionsblende leicht vom Anwender bearbeitet werden, z.B. um mit den erforderlichen Funktionselementen ausgestattet werden.

Gemäß einer vorteilhaften Weiterbildung der Erfindung ist vorgesehen, dass die erste und/oder die zweite Trageinrichtung wenigstens einen Konzepthalter aufweist. Dies hat den Vorteil, dass weitere Hilfsmittel, die der Benutzer des Tragsäulensystems zur Durchführung seiner Tätigkeiten benötigt, auf einfache Weise an der Tragsäule fixiert werden können. Es ist insbesondere kein zusätzliches Bauteil an der Tragsäule anzubringen, da der Konzepthalter bereits Teil der ersten und/oder der zweiten Trageinrichtung ist oder daran befestigt ist.

Gemäß einer vorteilhaften Weiterbildung der Erfindung ist vorgesehen, dass als Funktionselement ein Not-Aus-Betätigungselement der Computereinrichtung oder einer mit der Computereinrichtung verbundenen Anlage an der Funktionsblende angeordnet ist. Dies erlaubt eine einfache und schnelle Abschaltung der Computereinrichtung und/oder der damit verbundenen Anlage.

Gemäß einer vorteilhaften Weiterbildung der Erfindung ist vorgesehen, dass die zweite Trageinrichtung ein Strangpress-Profilbauteil mit einer Auflagefläche für das manuelle Eingabegerät der Computereinrichtung aufweist, wobei das Strangpress-Profilbauteil seitlich durch Verschlussplatten verschlossen ist. Die Ausführung als Strangpress-Profilbauteil hat den Vorteil, dass die zweite Trageinrichtung je nach Bedarf in unterschiedlichen Dimensionen bereitgestellt werden kann, je nach dem, in welcher Länge ein Teil des Strangpress-Profilbauteils abgetrennt wird. Auf diese Weise ist z.B. eine Anpassung der zweiten Trageinrichtung an unterschiedlich breite manuelle Eingabegeräte, z.B. Computertastaturen, möglich. Ein weiterer Vorteil ist, dass in das Strangpress-Profilbauteil Nuten zur Aufnahme von Federmuttern eingearbeitet sein können. Diese Nuten können gleich beim Strangpressvorgang darin erzeugt werden, sodass ein universell nutzbares Strangpress-Profilbauteil bereitsteht, aus dem eine zweite Trageinrichtung geschaffen werden kann, bei der durch die daran vorhandenen Nuten integrierte Befestigungsmöglichkeiten für weitere Elemente vorhanden sind. Die zweite Trageinrichtung kann insbesondere pultförmig ausgebildet sein, sodass eine auf der zweiten Trageinrichtung gelagerte Tastatur eine gewisse Neigung zum Benutzer hin hat.

Gemäß einer vorteilhaften Weiterbildung der Erfindung ist vorgesehen, dass in der zweiten Trageinrichtung ein ausziehbares und einschiebbares Mousepad integriert ist. Dies hat den Vorteil, dass an der zweiten Trageinrichtung außer einer Computer-tastatur zusätzlich eine Computermaus gelagert werden kann und zugleich eine entsprechende Bedienfläche für die Computermaus bereitgestellt wird. Durch die Ausziehbarkeit und Einschiebbarkeit des Mousepads kann dieses nur bei Bedarf herausgezogen werden. Wird es nicht benötigt, kann es eingeschoben werden, sodass die zweite Trageinrichtung weniger Platzbedarf hat.

Gemäß einer vorteilhaften Weiterbildung der Erfindung ist vorgesehen, dass an der Tragsäule zusätzlich zum visuellen Ausgabegerät der Computereinrichtung eine Signalleuchte befestigt ist. Die Signalleuchte kann z.B. im oberen Bereich der Tragsäule, insbesondere oben auf einer Abdeckplatte der Tragsäule, angeordnet sein. Über die Signalleuchte kann z.B. ein Funktionszustand der Computereinrichtung oder einer mit der Computereinrichtung verbundenen Anlage angezeigt werden.

Gemäß einer vorteilhaften Weiterbildung der Erfindung ist vorgesehen, dass die Tragsäule im Querschnitt als Mehrkammerprofil ausgebildet ist, wobei das Mehrkammerprofil wenigstens eine geschlossene vordere Kammer und eine zu einer Rückseite der Tragsäule hin offene hintere Kammer aufweist, wobei die vordere Kammer durch wenigstens eine innere Trennwand des Mehrkammerprofils von der hinteren Kammer getrennt ist. Dies hat den Vorteil, dass die Tragsäule aufgrund ihrer vorderen geschlossenen Kammer eine hohe Resistenz gegen Umwelteinflüsse, z.B. Verschmutzung, aufweist und gleichzeitig mechanisch sehr robust ist. Durch die geschlossene vordere Kammer kann zudem ein abgedichteter, feuchtigkeitsgeschützter Bereich geschaffen werden, der beispielsweise die IP65-Anforderungen erfüllt. Zusätzlich ist eine offene hintere Kammer vorhanden, die zur Rückseite der Tragsäule hin offen ist und dementsprechend einen einfachen Zugang für die Anbringung von Halterungen oder zur Führung von Kabeln bietet. Durch die Öffnung an der Rückseite sind in der offenen Kammer der Tragsäule angeordnete Elemente in geringerem Maße den Umwelteinflüssen ausgesetzt und werden zudem von einem Benutzer, der in der Regel von der Vorderseite her an der am Tragsäulensystem befestigten Computereinrichtung arbeitet, weniger wahrgenommen und dementsprechend auch nicht als störend empfunden.

Das Mehrkammerprofil kann außer der geschlossenen vorderen Kammer und der offenen hinteren Kammer noch weitere Kammern aufweisen. Gemäß einer vorteilhaften Weiterbildung der Erfindung weist die Tragsäule nur diese zwei Kammern auf, nämlich die geschlossene vordere Kammer und die offene hintere Kammer. Auf diese Weise wird ein mechanisch robustes und dennoch einfach herstellbares Mehrkammerprofil für die Tragsäule bereitgestellt.

Die Vorderseite der Tragsäule ist dabei diejenige Seite, an der ein Benutzer der Computereinrichtung, die an der Tragsäule befestigt ist, an dieser arbeitet. Dementsprechend ist in der Regel das visuelle Ausgabegerät im Wesentlichen auch zur Vorderseite hin ausgerichtet. Auch das manuelle Eingabegerät weist im Wesentlichen zur Vorderseite der Tragsäule hin. Die Rückseite der Tragsäule ist dementsprechend die der Vorderseite abgewandte Seite der Tragsäule.

Das visuelle Ausgabegerät der Computereinrichtung kann z.B. ein Bildschirm sein, z.B. ein Flachbildschirm. Das manuelle Eingabegerät der Computereinrichtung kann z.B. eine Tastatur, eine Computermaus oder ein ähnliches Eingabegerät sein, oder eine Kombination solcher Eingabegeräte. Die Computereinrichtung kann insbesondere als Industrie-PC (IPC) ausgebildet sein. Bei einem solchen IPC kann die Recheneinheit beispielsweise in einer Baueinheit mit dem visuellen Ausgabegerät, z.B. einem Bildschirm, ausgebildet sein.

Gemäß einer vorteilhaften Weiterbildung der Erfindung ist vorgesehen, dass innerhalb der hinteren Kammer Fixiereinrichtungen zur Befestigung der ersten und/oder der zweiten Trageinrichtung an der Tragsäule angeordnet sind. Dies hat den Vorteil, dass die Anbringung der ersten und/oder der zweiten Trageinrichtung an der Tragsäule von der Rückseite der Tragsäule her erfolgen kann, obwohl die durch die erste und/oder zweite Trageinrichtung getragenen Elemente der Computereinrichtung von der Vorderseite der Tragsäule her zugänglich sind. Diese rückwärtige Befestigung der ersten und/oder der zweiten Trageinrichtung hat den Vorteil, dass die Tragsäule hinsichtlich ihrer äußeren Form sowohl von der Frontseite als auch seitlich relativ glatt und eben gestaltet werden kann, da im Unterschied zur US 8,191,487 B2 keine frontseitigen oder seitlichen Führungsschienen oder sonstigen Befestigungsmittel zur Befestigung der ersten und/oder der zweiten Trageinrichtung erforderlich sind. Auch ist es nicht erforderlich, dass die geschlossene vordere Kammer der Tragsäule durchbohrt wird, um Befestigungsbohrungen zur Anbringung der ersten und/oder der zweiten Trageinrichtung zu schaffen. Es können vielmehr die vorbereiteten Fixiereinrichtungen innerhalb der hinteren Kammer dafür genutzt werden.

Die Fixiereinrichtungen innerhalb der hinteren Kammer können je nach Ausführungsform der verwendeten Halterung zum Anbringen der ersten und/oder der zweiten Trageinrichtung und der verwendeten Befestigungsmittel unterschiedlich ausgebildet sein, z.B. in Form von Bohrungen, Nuten, z.B. Nuten zur Aufnahme von Federmuttern, oder Führungsschienen oder sonstige Führungsprofile zum Aufnehmen längsverschieblich verstellbarer Halterungen. Auch eine Kombination mehrerer Fixiereinrichtungen kann vorteilhaft vorgesehen sein.

Als Federmutter bezeichnet man eine Mutter, in die eine Schraube eingeschraubt werden kann, wobei die Mutter mit einer Spreizfeder gekoppelt ist. Wird die Mutter mit der Spreizfeder in eine als Nut ausgebildete Fixiereinrichtung z.B. in der hinteren Kammer eingesteckt, so wird die Mutter durch die Spreizfeder, die die Tendenz hat, sich aufzuspreizen, in der Nut gehalten.

Gemäß einer vorteilhaften Weiterbildung der Erfindung ist vorgesehen, dass die erste Trageinrichtung mittels einer ersten Halterung an der Tragsäule befestigt ist und/oder die zweite Trageinrichtung mittels einer zweiten Halterung an der Tragsäule befestigt ist. Die erste Trageinrichtung kann damit insbesondere mittels einer ersten Halterung an der Tragsäule befestigt sein, die als separates Bauteil von der zweiten Halterung ausgebildet ist. Dementsprechend können die zu tragenden Lasten auf jeweilige an den Tragbedarf angepasste Halterungen verteilt werden. Die erste Halterung kann z.B. als VESA-Halterung ausgebildet sein.

Gemäß einer vorteilhaften Weiterbildung der Erfindung ist vorgesehen, dass die erste und/oder die zweite Halterung die Tragsäule beidseitig umgreift. Dementsprechend kann durch die erste und/oder die zweite Halterung die jeweils daran befestigte Trageinrichtung im Wesentlichen an der Vorderseite der Tragsäule angeordnet sein, während in Folge des Umgreifens der Tragsäule durch entsprechende seitlich an der Tragsäule vorbeigeführte Haltearme der ersten und/oder der zweiten Halterung diese Halterung von der Rückseite her an der Tragsäule befestigt sein kann, indem die Haltearme der jeweiligen Halterung zu den Fixiereinrichtungen in der hinteren Kammer geführt sind. Dies erlaubt eine robuste Befestigung der ersten und/oder der zweiten Trageinrichtung an der Tragsäule ohne Störung des positiven optischen Eindrucks des Tragsäulensystems. Hierbei kann die erste und/oder die zweite Halterung derart ausgebildet sein, dass sie nicht um die Längsachse der Tragsäule gegenüber der Tragsäule drehbar ist. Soll dennoch eine Verstellbarkeit der Lage der ersten Trageinrichtung oder der zweiten Trageinrichtung in einer Drehachse parallel zur Längsachse der Tragsäule möglich sein, kann z.B. die erste und/oder die zweite Trageinrichtung mittels eines Gelenks mit der jeweiligen Halterung verbunden sein. Die erste und/oder die zweite Halterung kann zusätzlich eine Verstellbarkeit der daran befestigten ersten oder zweiten Trageinrichtung um eine horizontal verlaufende Achse erlauben, z.B. um die Neigung eines Bildschirms der Computereinrichtung nach Wunsch anzupassen.

Gemäß einer vorteilhaften Weiterbildung der Erfindung ist vorgesehen, dass die erste Halterung und die zweite Halterung getrennt voneinander höhenverstellbar sind. Auf diese Weise ist eine besonders flexible Anpassung der Vertikalposition der Eingabe- und Ausgabegeräte der Computereinrichtung an die Bedürfnisse eines Benutzers möglich, insbesondere ist eine Anpassung an eine Bedienung der Computereinrichtung in sitzender oder stehender Position des Benutzers möglich.

Die Höhenverstellung der ersten und/oder der zweiten Halterung an der Tragsäule kann z.B. durch Längsverschiebung der jeweiligen Halterung auf der Tragsäule erfolgen. Längsverschiebung bedeutet hierbei eine Verschiebung in Richtung der vertikalen Längsachse der Tragsäule. Hierfür kann z.B. eine Gleiteinrichtung (Slider) vorhanden sein, z.B. ein an der Außenseite der Tragsäule angebrachter Slider. Zur Feststellung der ersten Halterung bzw. der zweiten Halterung in einer gewünschten eingestellten Vertikalposition können Fixiermittel vorhanden sein, z.B. ein jeweiliger Klemm-Fixiermechanismus, der ein schnelles Fixieren durch Klemmen der jeweiligen Halterung in der gewünschten Vertikalposition an der Tragsäule erlaubt. Der Klemm-Fixiermechanismus kann als Teil des Sliders ausgebildet sein.

Gemäß einer vorteilhaften Weiterbildung der Erfindung ist vorgesehen, dass in der hinteren Kammer ein Aufnahmeraum für ein innerhalb der hinteren Kammer befestigbares Kopplungselement angeordnet ist, das als separates Bauteil oder Teil der ersten oder zweiten Halterung ausgebildet ist und zur Befestigung der ersten oder der zweiten Trageinrichtung an der Tragsäule eingerichtet ist. Dies hat den Vorteil, dass die Anbringung der ersten und/oder der zweiten Halterung an den Fixiereinrichtungen der hinteren Kammer vereinfacht wird. So kann zunächst das Kopplungselement als separates Bauteil in dem Aufnahmeraum der hinteren Kammer befestigt werden. An diesem Kopplungselement kann dann die erste oder die zweite Halterung befestigt werden.

Gemäß einer vorteilhaften Weiterbildung der Erfindung ist vorgesehen, dass in der hinteren Kammer zwischen dem Aufnahmeraum und der inneren Trennwand ein Kabelaufnahmeraum zur Aufnahme von in der hinteren Kammer verlegten Kabeln angeordnet ist. Auf diese Weise können in der hinteren Kammer zusätzlich Kabel verlegt werden, ohne dass die Anbringung der ersten oder der zweiten Halterung in der hinteren Kammer der Tragsäule erschwert oder gestört wird. Auch eine Veränderung der vertikalen Position des zuvor genannten Kopplungselementes in dem Aufnahmeraum ist ohne weiteres möglich, auch bei schon im Kabelaufnahmeraum verlegten Kabeln. So können in dem Kabelaufnahmeraum z.B. Anschlusskabel des visuellen Ausgabegerätes der Computereinrichtung, Kabel des manuellen Eingabegerätes oder sonstige Kabel der Computereinrichtung verlegt werden. Die Kabel können an einer gewünschten Stelle aus der hinteren Kammer herausgeführt werden und um die Tragsäule außen herum zu dem Ausgabegerät oder dem Eingabegerät der Computereinrichtung geführt werden. Hierdurch kann insbesondere vermieden werden, dass Kabel kreuz und quer außerhalb oder entlang der Tragsäule verlegt werden.

Gemäß einer vorteilhaften Weiterbildung der Erfindung ist vorgesehen, dass in der hinteren Kammer ein Führungsprofil für ein innerhalb der hinteren Kammer längsverschieblich befestigbares Kopplungselement angeordnet ist, durch das das Kopplungselement in Längsrichtung der Tragsäule im wesentlichen spielfrei verschieblich geführt ist. Das längsverschieblich befestigbare Kopplungselement kann insbesondere als Gleitelement ausgebildet sein, d.h. als Slider, der in dem Führungsprofil entlang gleiten kann und auf diese Weise in eine gewünschte Vertikalposition gebracht werden kann. Das Führungsprofil kann dabei z.B. in der Art von Führungsschienen ausgebildet sein, in denen das Kopplungselement gleitend geführt wird. Das Führungsprofil kann insbesondere in dem Aufnahmeraum angeordnet sein.

Der Slider ist zur Befestigung der ersten oder der zweiten Trageinrichtung an der Tragsäule eingerichtet ist. Dies kann z.B. derart erfolgen, dass die erste oder die zweiten Halterung an dem Slider befestigt wird und die entsprechende erste oder zweite Trageinrichtung an dieser Halterung befestigt wird. Mittels des Sliders ist dann eine einfache Verstellbarkeit der Vertikalposition der daran befestigten Trageinrichtung möglich.

Gemäß einer vorteilhaften Weiterbildung der Erfindung ist vorgesehen, dass in der hinteren Kammer ein Kopplungselement, z.B. der zuvor genannte Slider, angeordnet ist, das einen Klemm-Fixiermechanismus aufweist, durch den das Kopplungselement innerhalb der hinteren Kammer in dem Führungsprofil festklemmbar und damit gegenüber einer Verschiebung in Längsrichtung der Tragsäule fixierbar ist. Durch einen solchen Klemm-Fixiermechanismus ist eine einfache und schnelle Fixierbarkeit des Kopplungselementes gegenüber Längsverschiebung realisierbar. Die Fixierung kann auch schnell wieder gelöst werden, sodass das Kopplungselement und dementsprechend die über eine Halterung daran befestigte Trageinrichtung einfach und schnell hinsichtlich der Vertikalposition einer Tragsäule verstellt werden kann. Der Klemm-Fixiermechanismus kann z.B. derart ausgebildet sein, dass durch Festziehen einer Klemmschraube ein Teil des Kopplungselementes, das in dem Führungsprofil geführt ist, aufgespreizt wird und dadurch eine Klemmung des Kopplungselementes innerhalb des Führungsprofils realisiert wird.

Gemäß einer vorteilhaften Weiterbildung der Erfindung ist vorgesehen, dass in der hinteren Kammer in Längsrichtung der Tragsäule verlaufende Nuten zur Aufnahme von Federmuttern angeordnet sind. Auf diese Weise können mit einfachen Mitteln Fixiereinrichtungen zur Befestigung der ersten und/oder der zweiten Trageinrichtung an der Tragsäule realisiert werden, die dem Anwender eine große Flexibilität bei der Anbringung und Positionierung der ersten und der zweiten Trageinrichtung erlauben. Zudem können die Nuten für die Befestigung weiterer Elemente an der Tragsäule genutzt werden.

Gemäß einer vorteilhaften Weiterbildung der Erfindung ist vorgesehen, dass die Tragsäule im Bereich der hinteren Kammer Nuten zur Aufnahme von flexiblen Verschlussleisten aufweist, die zur optischen Abdeckung der hinteren Kammer zur Rückseite hin bei gleichzeitiger Durchführungsmöglichkeit für Kabel eingerichtet sind. Dies erlaubt es, die hintere, offene Kammer zumindest in optischer Hinsicht abzuschließen, ohne die Möglichkeiten zur Anbringung von Halterungen oder der Durchführung von Kabeln einzuschränken. Solche flexiblen Verschlussleisten können z.B. durch Bürstenleisten, Schaumstoffleisten, Textilstreifen oder Gummidichtungen realisiert werden.

Gemäß einer vorteilhaften Weiterbildung der Erfindung ist vorgesehen, dass das Vertikalbefestigungsmittel wenigstens ein Drehgelenk aufweist, durch das die Tragsäule um ihre Längsachse drehbar im Raum gelagert ist. Dies hat den Vorteil, dass die Tragsäule insgesamt um ihre Längsachse gedreht werden kann, d.h. bei einer Drehung der Tragsäule wandern die daran befestigte erste Trageinrichtung und zweite Trageinrichtung mit, sodass ein Benutzer nicht beide Trageinrichtungen und gegebenenfalls weitere Elemente separat drehen muss.

Gemäß einer vorteilhaften Weiterbildung der Erfindung ist vorgesehen, dass ein Faltenbalg einerseits mit einem Durchbruch an einer Außenwand der Tragsäule und andererseits mit der ersten oder der zweiten Trageinrichtung oder der ersten oder der zweiten Halterung gekoppelt ist. Hierdurch wird die zusätzliche Möglichkeit geschaffen, dass Anschlusskabel des visuellen Ausgabegerätes oder des manuellen Eingabegerätes in zusätzlich geschützter Weise entlang der Tragsäule und in das Innere der Tragsäule geführt werden können. Durch den Faltenbalg kann, bei entsprechend abgedichteter Anbringung an dem Durchbruch an der Außenwand der Tragsäule, ein weiterhin guter Schutz vor Umwelteinflüssen gewährleistet werden. Insbesondere kann die IP65-Tauglichkeit der Tragsäule beibehalten werden. Durch die Ausbildung als Faltenbalg ist zudem eine Höhenverstellung der ersten Trageinrichtung bzw. der zweiten Trageinrichtung weiterhin möglich.

Gemäß einer vorteilhaften Weiterbildung der Erfindung ist die erste Trageinrichtung und/oder die zweite Trageinrichtung längsverschieblich an der Tragsäule befestigt und über eine Dämpfungseinrichtung mit der Tragsäule gekoppelt, wobei die Dämpfungseinrichtung eine Längsverschiebebewegung der jeweiligen Trageinrichtung gegenüber der Tragsäule bremst und/oder dämpft. Die Dämpfungseinrichtung kann z.B. als Gasdruckfeder oder ähnliche Federeinrichtung ausgebildet sein. Auf diese Weise ist die jeweilige Trageinrichtung jederzeit höhenverstellbar, ohne dass zunächst Fixiermittel gelöst werden müssen. Zudem wird eine jeweils eingestellte Höheneinstellung durch die Dämpfungseinrichtung gehalten.

Gemäß einer vorteilhaften Weiterbildung der Erfindung ist vorgesehen, dass das Tragsäulensystem eine Kabelführungseinrichtung aufweist, die mehrere Kabelführungsabschnitte aufweist, die seitlich um die Tragsäule herum von der Rückseite bis zur Vorderseite der Tragsäule reichen. Die Kabelführungseinrichtung kann direkt an der Tragsäule befestigt sein, oder indirekt, indem die Kabelführungseinrichtung an der ersten oder der zweiten Trageinrichtung befestigt ist. Die Kabelführungseinrichtung kann wenigstens zwei seitlich auf die Tragsäule aufsetzbare, miteinander verbindbare Teile aufweisen.

Die Erfindung wird nachfolgend anhand von Ausführungsbeispielen unter Verwendung von Zeichnungen näher erläutert.

Es zeigen
- Figur 1: ein Tragsäulensystem in perspektivischer Darstellung und
- Figuren 2 bis 4: eine Detailansicht des Tragsäulensystems im Bereich der ersten Trageinrichtung in verschiedenen Ansichten und
- Figuren 5 bis 7: Detailansichten des Tragsäulensystems im Bereich der ersten Trageinrichtung in verschiedenen Ansichten in einer alternativen Ausführungsform und
- Figur 8: das Tragsäulensystem gemäß Figur 1 in einer Seitenansicht und
- Figur 9: das Tragsäulensystem gemäß Figur 1 in einer Ansicht von der Rückseite und
- Figur 10: ein Tragsäulensystem in Seitenansicht in einer vergleichbaren Ausführungsform wie Figur 8, jedoch mit einer Abwandlung im Bereich der ersten Trageinrichtung und
- Figur 11: das Tragsäulensystem gemäß Figur 10 in einer Ansicht von der Vorderseite und
- Figur 12: ein mit einer Computereinrichtung bestücktes Tragsäulensystem in perspektivischer Darstellung und
- Figur 13: das Tragsäulensystem gemäß Figur 12 in einer Seitenansicht und
- Figur 14: das Tragsäulensystem gemäß Figur 12 in einer Ansicht von der Vorderseite und
- Figuren 15 bis 17: unterschiedliche Ansichten einer ersten Funktionsblende und
- Figuren 18 bis 20: unterschiedliche Ansichten einer zweiten Funktionsblende und
- Figur 21: ein Querschnitt einer ersten Ausführungsform einer Tragsäule und
- Figur 22: ein Ausschnitt der Tragsäule gemäß Figur 21 in perspektivischer Darstellung und
- Figur 23: ein Querschnitt einer zweiten Ausführungsform einer Tragsäule und
- Figur 24: ein Ausschnitt der Tragsäule gemäß Figur 23 in perspektivischer Darstellung und
- Figur 25: ein Querschnitt einer dritten Ausführungsform einer Tragsäule und
- Figur 26: einen Slider in perspektivischer Darstellung und
- Figur 27: den Slider gemäß Figur 26 in Seitenansicht und
- Figur 28: den Slider gemäß Figur 26 in einer Explosionsdarstellung und
- Figur 29: den Slider, wie in Figur 28 dargestellt, zusammen mit der ersten Halterung und einem Ausschnitt der Tragsäule und
- Figur 30: die Elemente gemäß Figur 29 in zusammengebautem Zustand in perspektivischer Darstellung und
- Figur 31: die Elemente gemäß Figur 30 in einer Ansicht von oben und
- Figur 32: die Elemente gemäß Figur 30 in Seitenansicht und
- Figur 33: eine an der Tragsäule angebrachte zweite Halterung sowie eine zweite Trageinrichtung in perspektivischer Darstellung und
- Figur 34: eine weitere Ausführungsform der zweiten Trageinrichtung in perspektivischer Darstellung und
- Figur 35: eine erste Ausführungsform eines Vertikalbefestigungsmittels der Tragsäule in perspektivischer Darstellung und
- Figur 36: eine zweite Ausführungsform eines Vertikalbefestigungsmittels einer Tragsäule in perspektivischer Darstellung und
- Figur 37: die erste Ausführungsform des Vertikalbefestigungsmittels in einer perspektivischen Ansicht auf die Befestigungsseite zur Tragsäule und
- Figur 38: die erste Ausführungsform des Vertikalbefestigungsmittels in einer perspektivischen Ansicht auf die der Befestigungsseite abgewandten Seite und
- Figur 39: die zweite Ausführungsform des Vertikalbefestigungsmittels in einer perspektivischen Ansicht auf die Befestigungsseite zur Tragsäule und
- Figur 40: die zweite Ausführungsform des Vertikalbefestigungsmittels in einer perspektivischen Ansicht auf die der Befestigungsseite abgewandten Seite und

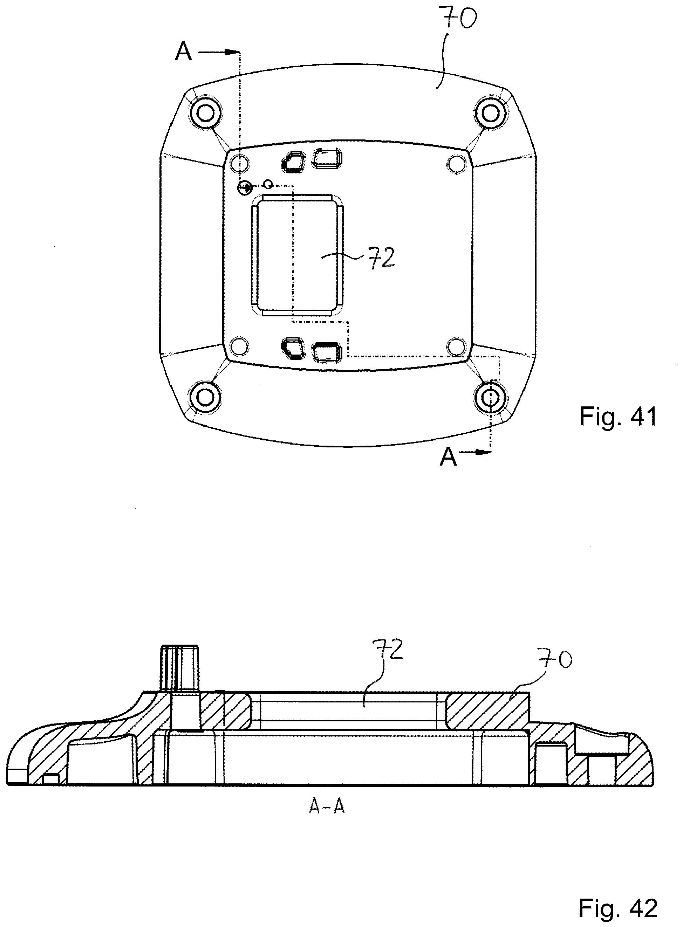

- Figur 41: die erste Ausführungsform des Vertikalbefestigungsmittels in Draufsicht und
- Figur 42: ein Querschnitt entlang der Schnittlinie A-A durch die erste Ausführungsform des Vertikalbefestigungsmittels und
- Figur 43: ein Querschnitt einer vierten Ausführungsform einer Tragsäule und
- Figur 44: den oberen Bereich einer Tragsäule mit einer Kabelführungseinrichtung in perspektivischer Ansicht und
- Figur 45: die Teile gemäß Figur 44 in einer Explosionsdarstellung und
- Figur 46: den oberen Abschnitt der Tragsäule gemäß Figur 44 in Seitenansicht und
- Figur 47: eine weitere Variante der Anbringung einer Kabelführungseinrichtung in einer vergleichbaren Darstellung wie die Figur 44.

In den Figuren werden gleiche Bezugszeichen für einander entsprechende Elemente verwendet.

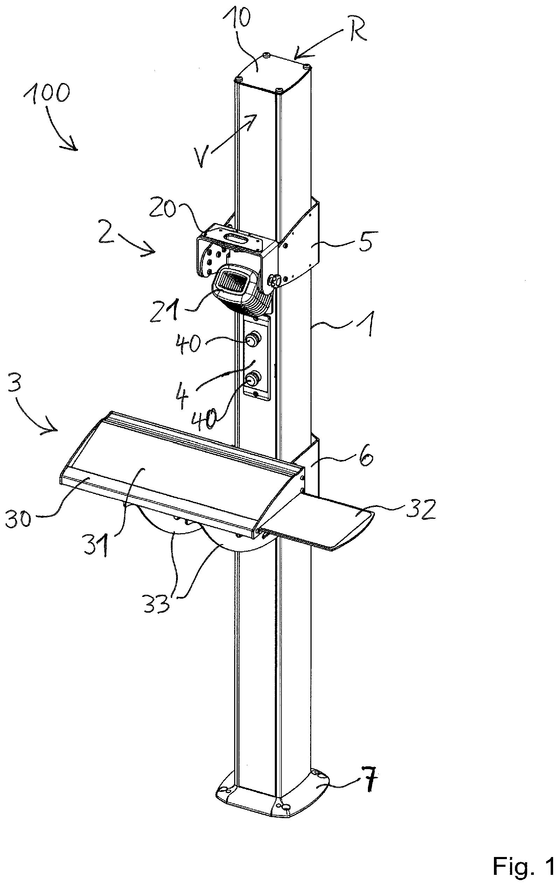

Das in Figur 1 dargestellte Tragsäulensystem 100 weist eine Tragsäule 1 auf, die mittels eines am unteren Ende der Tragsäule 1 angeordneten Vertikalbefestigungsmittels 7 in Form eines nicht drehbaren Fußes am Fußboden befestigt ist. Die Tragsäule 1 ist am oberen Ende durch eine Abschlussplatte 10 verschlossen. An der Tragsäule 1 ist über eine erste Halterung 5 eine erste Trageinrichtung 2 zum Tragen des wenigstens einen visuellen Ausgabegeräts der Computereinrichtung befestigt. Etwas weiter unten an der Tragsäule 1 ist über eine zweite Halterung 6 eine zweite Trageinrichtung 3 zum Tragen des wenigstens einen manuellen Eingabegeräts der Computereinrichtung befestigt. Die zweite Trageinrichtung 3 kann in Form einer Tastaturauflage 30 ausgebildet sein, die ein seitlich aus der Tastaturauflage 30 herausziehbares und einschiebbares Mousepad 32 aufweist. Die Tastaturauflage 30 kann eine schräg zum Bediener gewandte Auflagefläche 31 zum Auflegen eines in Form einer Computer-Tastatur ausgebildeten manuellen Eingabegeräts aufweisen. Die Tastaturauflage 30 ist über Verbindungselemente 33 mit der zweiten Halterung 6 verbunden. Die erste Trageinrichtung 2 kann z.B. ein über eine gelenkige Anordnung verschwenkbar an der ersten Halterung 5 befestigtes Halteblech 20 aufweisen, an dem ein in Form eines Bildschirms ausgebildetes visuelles Ausgabegerät befestigt werden kann. Durch die Verschwenkbarkeit kann die Neigung des Bildschirms zum Anwender hin eingestellt werden. Für die Neigungsverstellung kann die gelenkige Anordnung eine Rastscheibe aufweisen, so dass die Verstellung der Neigung in bestimmten Rastschritten durchgeführt werden kann.

Wie erkennbar ist, weisen die erste Trageinrichtung 2 und die zweite Trageinrichtung 3 zu derselben Seite der Tragsäule 1, die die Vorderseite V der Tragsäule 1 bildet. Die der Vorderseite V angewandte Seite ist die Rückseite R der Tragsäule 1.

Ferner ist erkennbar, dass an der Vorderseite V ein Faltenbalg 21 an der Tragsäule 1 befestigt ist. Auf dessen Funktion und Befestigung wird nachfolgend noch näher eingegangen.

Ferner ist an der Vorderseite V eine Funktionsblende 4 angebracht. An der Funktionsblende 4 sind zwei Bedienelemente 40 angeordnet, z.B. in Form von Tastern.

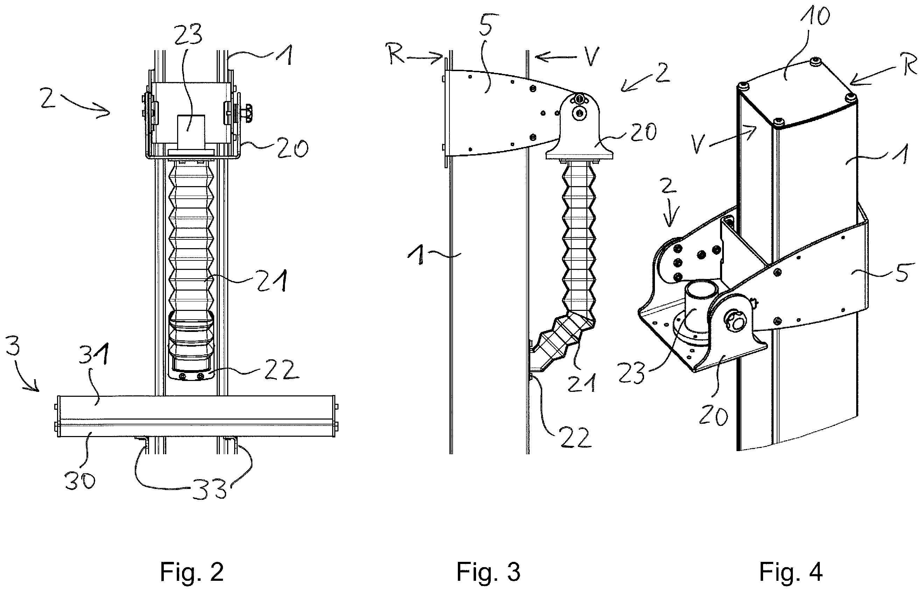

Die Figuren 2 bis 4 zeigen das Tragsäulensystem 100 gemäß Figur 1 mit einer alternativen Ausgestaltung im Bereich der ersten Trageinrichtung 2 sowie des Faltenbalgs 21. Die Figur 2 zeigt dabei die Tragsäule 1 von der Vorderseite V, die Figur 3 in Seitenansicht und die Figur 4 in einer perspektivischen Ansicht. Erkennbar ist, dass der Faltenbalg 21 nun etwas auseinandergezogen ist. Er ist an seinem unteren Ende über eine Flanschplatte 22 an einem Durchbruch der Vorderseite V der Tragsäule 1 befestigt. An der Oberseite ist der Faltenbalg 21 an dem Halteblech 20 mit einer Muffe 23 verschraubt. Die Muffe 23 ist in dieser Ausführungsform innerhalb des von dem abgewinkelten Halteblech 20 umgebenden Bereichs angeordnet. Durch die beschriebene Konstruktion mit dem Faltenbalg 21 können elektrische Leitungen in abgedichteter Weise aus dem Inneren der Tragsäule 1 zu dem an der ersten Trageinrichtung 2 befestigten visuellen Ausgabegerät geführt werden.

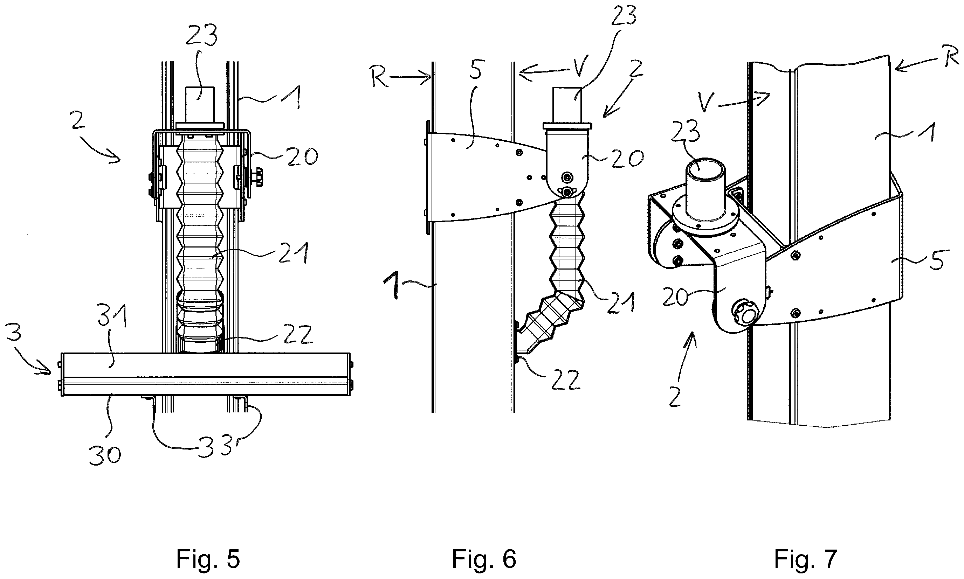

Die Figuren 5 bis 7 zeigen einen vergleichbaren Ausschnitt des oberen Teils der Tragsäule 1, an der die erste Trageinrichtung 2 angeordnet ist, wie die Figuren 2 bis 4. Die Figur 5 zeigt wiederum eine Ansicht von der Vorderseite V, die Figur 6 eine Seitenansicht, die Figur 7 eine perspektivische Ansicht. Im Unterschied zu der Ausführungsform der Figuren 2 bis 4 ist in dieser Ausführungsform die Muffe 23 außerhalb des von dem abgewinkelten Halteblech 20 angeordneten Bereichs angeordnet. Durch Auswahl der jeweils günstigsten Konfiguration der Varianten gemäß den Figuren 2 bis 4 oder 5 bis 7 kann vom Anwender jeweils eine geeignete Anpassung an die Elemente der verwendeten Computereinrichtung, insbesondere an das visuelle Ausgabegerät, vorgenommen werden.

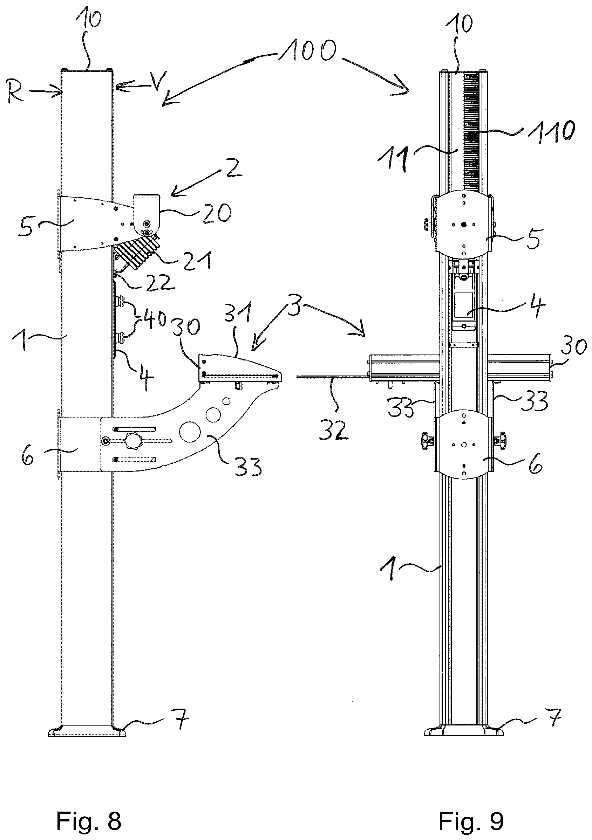

Die Figuren 8 bis 9 zeigen noch einmal das Tragsäulensystem 100 gemäß Figur 1, einmal in einer Seitenansicht (Figur 8) und einmal in einer Ansicht von der Rückseite R her (Figur 9). Erkennbar ist insbesondere, dass die Tragsäule 1 von der Rückseite R her offen ist, so dass ein Blick in die offene hintere Kammer 11 der Tragsäule 1 möglich ist. Soweit die Tragsäule 1 von der Rückseite R her zumindest optisch und gegen groben Schmutzeinfluss abgedeckt sein soll, können dort flexible Verschlussleisten 110 angeordnet werden, z.B. in Form von Bürstenleisten.

Ferner ist in der Figur 9 erkennbar, dass auch von der Rückseite R her eine oder mehrere Funktionsblenden 4 an der Tragsäule 1 angeordnet werden können, z.B. zur Realisierung von Kabeldurchführungen von der offenen Kammer 11 in die geschlossene Kammer der Tragsäule 1.

Die erste Halterung 5 und die zweite Halterung 6 können über entsprechende Ankopplungsmittel mit Fixierelementen im Inneren der hinteren offenen Kammer 11 der Tragsäule 1 befestigt werden, z.B. durch geeignet geformte Befestigungsbleche. Alternativ kann auch eine höhenverstellbare Fixierung vorhanden sein, z.B. über einen Slider, wie er nachfolgend noch näher beschrieben wird.

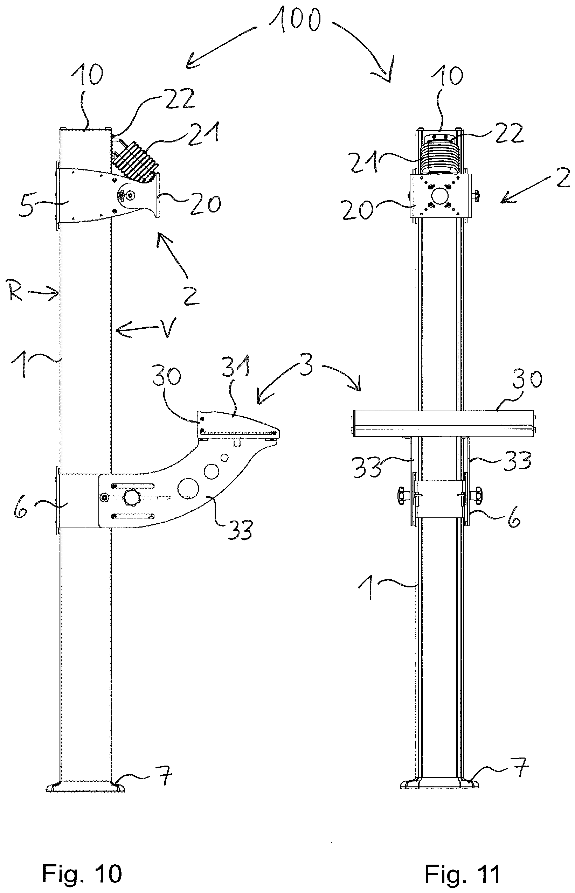

Anhand der Figuren 10 bis 11 wird eine alternative Art der Befestigung des Faltenbalgs 21 an der Tragsäule 1 dargestellt. Erkennbar ist, dass die Befestigungsstelle des Faltenbalgs 21 an der Tragsäule 1 nicht unbedingt unterhalb der ersten Trageinrichtung 2 angeordnet sein muss, sondern auch oberhalb der ersten Trageinrichtung 2 angeordnet sein kann. In diesem Fall ist der Faltenbalg 21 im oberen Bereich der Tragsäule 1 über die Flanschplatte 22 daran befestigt.

Der Faltenbalg 21 ist ein optionales Element des Tragsäulensystems 100. Mit anderen Worten, das Tragsäulensystem 100 kann auch ohne den Faltenbalg und dementsprechend ohne den dafür erforderlichen Durchbruch in der Tragsäule realisiert werden. Beispielsweise können Anschlusskabel für Teile der Computereinrichtung von der Rückseite der Tragsäule her, aus der offenen hinteren Kammer 11 kommend, um die Tragsäule herum zum entsprechenden Teil der Computereinrichtung geführt werden.

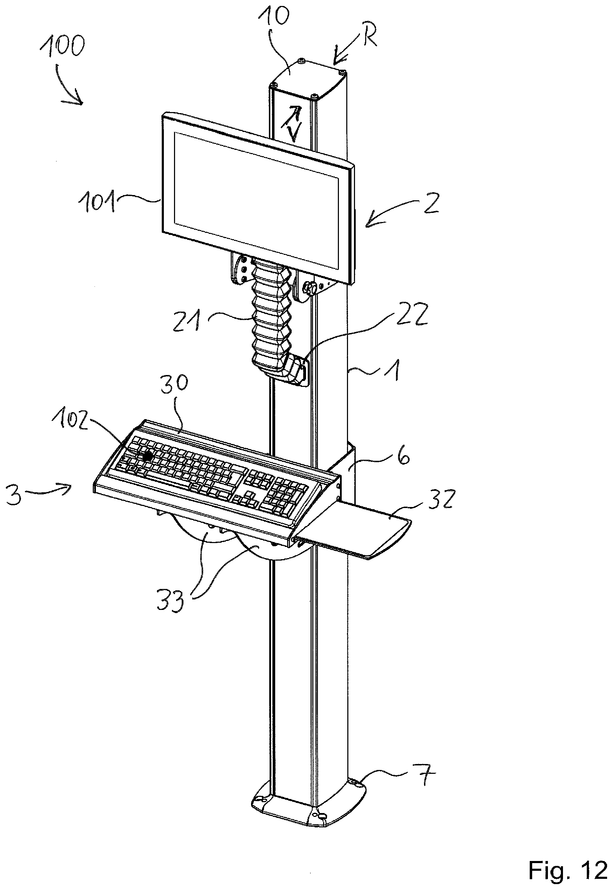

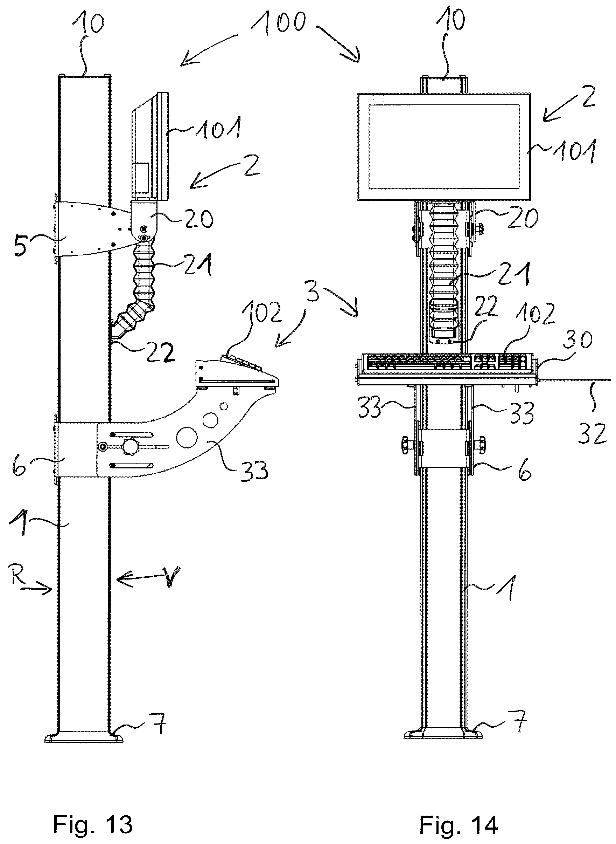

Die Figuren 12 bis 14 zeigen das Tragsäulensystem 100 gemäß Figur 1 mit an der ersten Trageinrichtung 2 befestigtem visuellen Ausgabegerät 101 sowie an der zweiten Trageinrichtung 3 angeordnetem manuellen Eingabegerät 102 in unterschiedlichen Darstellungen.

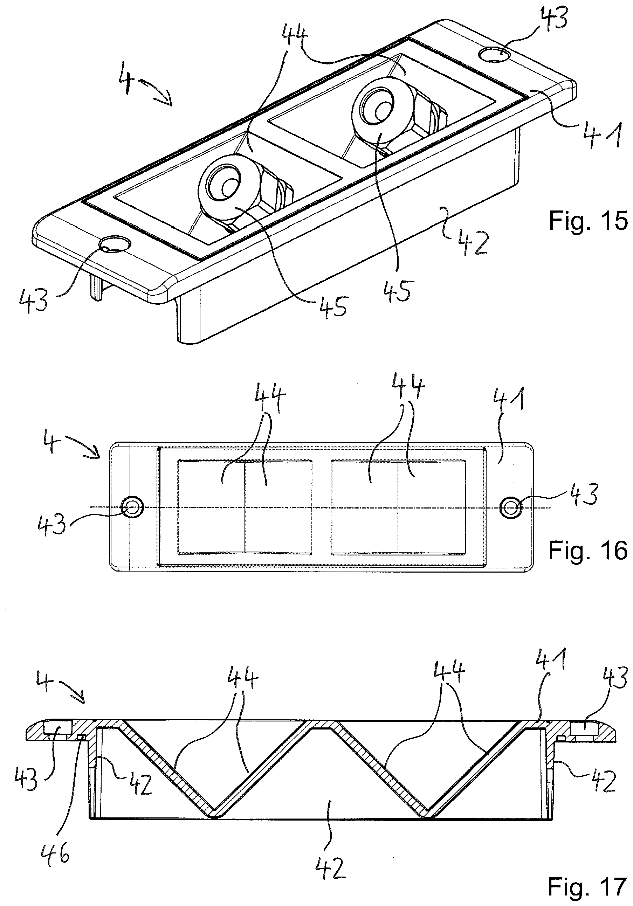

Wie erläutert, können an der Tragsäule 1 an der Vorderseite V oder der Rückseite R einer oder mehrere Durchbrüche angebracht werden, um daran entsprechende Funktionsblenden 4 zu befestigen. Die Figuren 15 bis 17 zeigen eine erste Ausführungsform einer Funktionsblende 4, die hauptsächlich für die Durchführung von Kabeln dient. Die Funktionsblende 4 weist eine zur Außenseite der Tragsäule 1 auszurichtende Hauptoberfläche 41 auf, die bei Anbringung an der Tragsäule 1 im Wesentlichen parallel zur Außenoberfläche der Tragsäule 1 verläuft. Die Hauptoberfläche 41 ist durch mehrere schräg, in diesem Fall im Zickzack angeordnete Durchführungswände 44 unterbrochen. An den Durchführungswänden 44 können vom Anwender nach Bedarf Durchbrüche angeordnet werden, um Kabel hindurchzuführen. Hierbei ist es vorteilhaft, für die Durchführung von Kabeln abgedichtete Kabelverschraubungen 45 an den Durchführungswänden 44 anzubringen, um die Kabel in abgedichteter Weise durch eine Wand der Tragsäule 1 zu führen.

Die Funktionsblende 4 weist einen rückwärtigen Befestigungsrahmen 42 auf, der auf der von der Hauptoberfläche 41 abgewandten Seite der Funktionsblende 4 angeordnet ist. Der Befestigungsrahmen 42 ist bei Anordnung der Funktionsblende 4 an der Tragsäule 1 im Wesentlichen im Inneren der Tragsäule 1 angeordnet. Im Bereich des Befestigungsrahmens 42 kann die Funktionsblende eine umlaufende Nut 46 zur Aufnahme einer Dichtung aufweisen. Ferner sind in den Endbereichen der Funktionsblende 4 Verschraubungslöcher 43 angeordnet. Auf diese Weise kann die Funktionsblende 4 mittels Schrauben von der Außenseite her an der Wand der Tragsäule 1 befestigt werden.

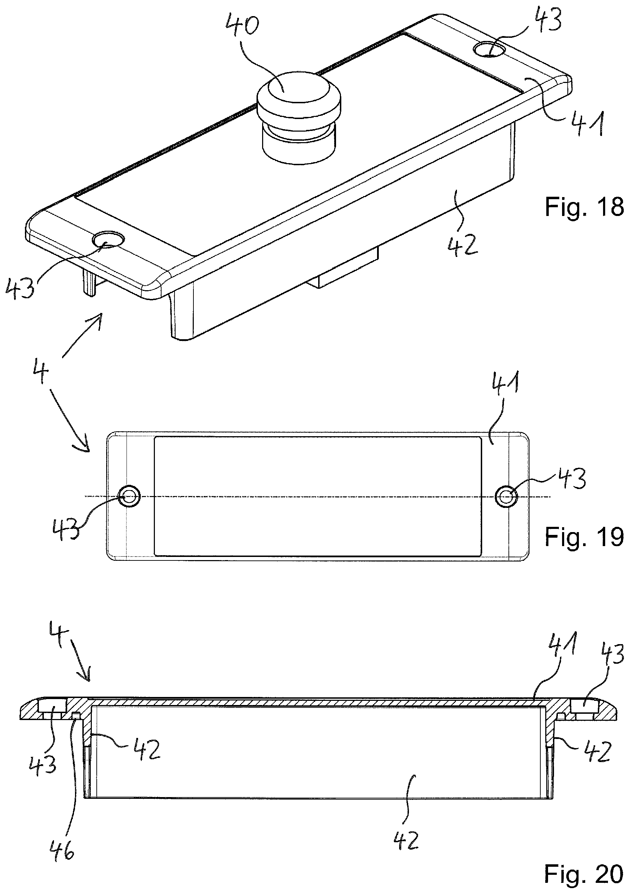

Die Figuren 18 bis 20 zeigen in vergleichbaren Ansichten wie die Figuren 15 bis 17 eine weitere Ausführungsform einer Funktionsblende 4. In diesem Fall ist die Hauptoberfläche 41 in Form einer im Wesentlichen ebenen Montagefläche der Funktionsblende 4 ausgebildet. Diese Ausführungsform der Funktionsblende 4 eignet sich besonders für die Anbringung von visuellen Anzeigeelementen, z.B. Leuchten, oder manuellen Bedienelementen, wie Tastern 40 oder Schaltern. Die Funktionsblenden 4 in ihren unterschiedlichen Ausführungsformen können je nach Bedarf vom Anwender ausgewählt und an der Tragsäule 1 befestigt werden und, wenn sich der Bedarf ändert, auch gewechselt werden.

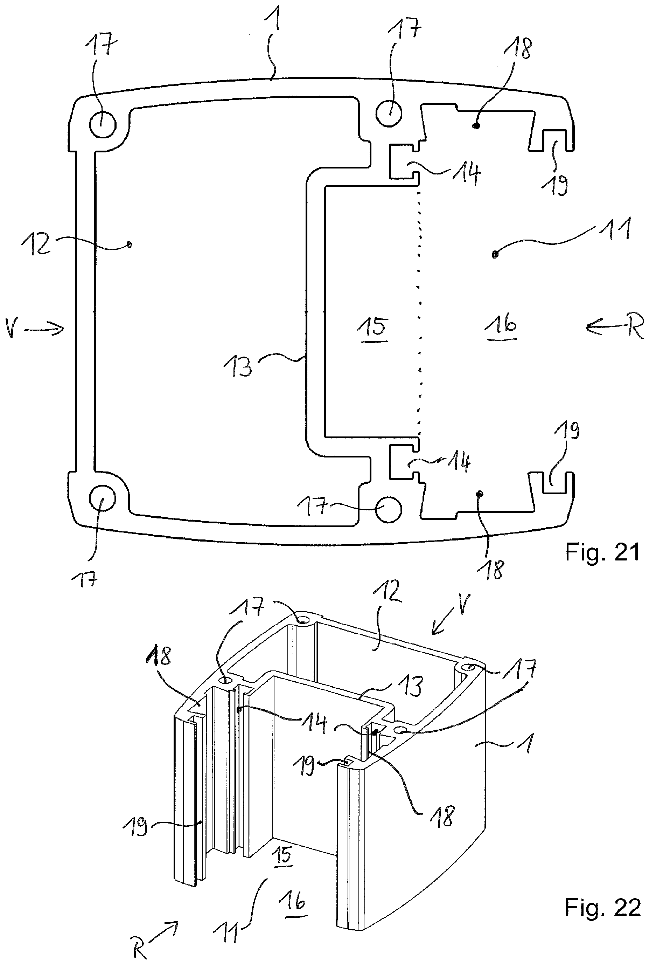

Anhand der Figuren 21 bis 22 wird eine erste Ausführungsform eines Profils der Tragsäule 1 erläutert. Bei allen Ausführungsformen ist eine vordere geschlossene Kammer 12 und eine hintere offene Kammer 11 vorhanden. Die hintere offene Kammer 11 ist über eine innere Trennwand 13 von der vorderen geschlossenen Kammer 12 getrennt. Dadurch, dass die vordere Kammer 12 als geschlossene Kammer ausgebildet ist, wird durch die umgebenden Außenwände der Tragsäule 1 in Verbindung mit der Trennwand 13 eine hohe Robustheit der Tragsäule 1 bei hoher Verwindungssteifigkeit realisiert. Durch die Ausbildung der hinteren Kammer 11 als offene Kammer sind Möglichkeiten zur Montage von an der Tragsäule zu befestigenden Elementen und zur Führung von Kabeln gegeben. Insbesondere können die Halterungen 5, 6 dort befestigt werden.

Innerhalb der hinteren Kammer 11 sind Fixiereinrichtungen 14 vorhanden, die in Form von in Längsrichtung der Tragsäule 1 verlaufenden Nuten ausgebildet sind. Über die Fixiereinrichtungen 14 können z.B. die erste Halterung und die zweite Halterung 5, 6 an der Tragsäule 1 befestigt werden. Die Fixiereinrichtungen 14 können auch zur Befestigung weiterer Elemente genutzt werden. Dementsprechend erstreckt sich ein an den Fixiereinrichtungen 14 in der hinteren Kammer 11 befestigtes Kopplungselement zur Ankopplung der ersten oder der zweiten Halterung nur in einem Teilbereich der hinteren Kammer 11, der nachfolgend als Aufnahmeraum 16 für ein solches Kopplungselement bezeichnet werden soll. Hierdurch teilt sich die hintere Kammer 11 in den Aufnahmeraum 16 und einen weiteren Raum 15 auf, wie durch die punktierte Linie angedeutet ist. Der weitere Raum 15 kann als Kabelaufnahmeraum zur Aufnahme von in der hinteren Kammer 11 verlegten Kabeln genutzt werden.

Soll die Befestigung der ersten Trageinrichtung 2 oder der zweiten Trageinrichtung 3 an der Tragsäule 1 nicht durch ein fest installiertes Kopplungselement erfolgen, sondern höhenverstellbar durch ein längsverschieblich befestigbares Kopplungselement wie z.B. einen Slider, so können in der hinteren Kammer 11 angeordnete Führungsschienen 18 für die Führung eines solchen Kopplungselements genutzt werden. In der Ausführungsform gemäß Figur 21 sind diese Führungsschienen 18 schwalbenschwanzförmig ausgebildet, um eine sichere Führung des Kopplungselements zu gewährleisten.

Zur Außenseite hin weist die hintere Kammer 11 außerdem Aufnahmenuten 19 zur Aufnahme der flexiblen Verschlussleisten 110 auf. Das Profil der Tragleiste 1 weist ferner in Längsrichtung verlaufende Hohlkammern 17 mit kreisrundem Querschnitt auf. Diese Hohlkammern 17 können z.B. zur Befestigung der oberen Abschlussplatte 10 an der Tragleiste 1 oder zur Befestigung des Vertikalbefestigungsmittels 7 genutzt werden.

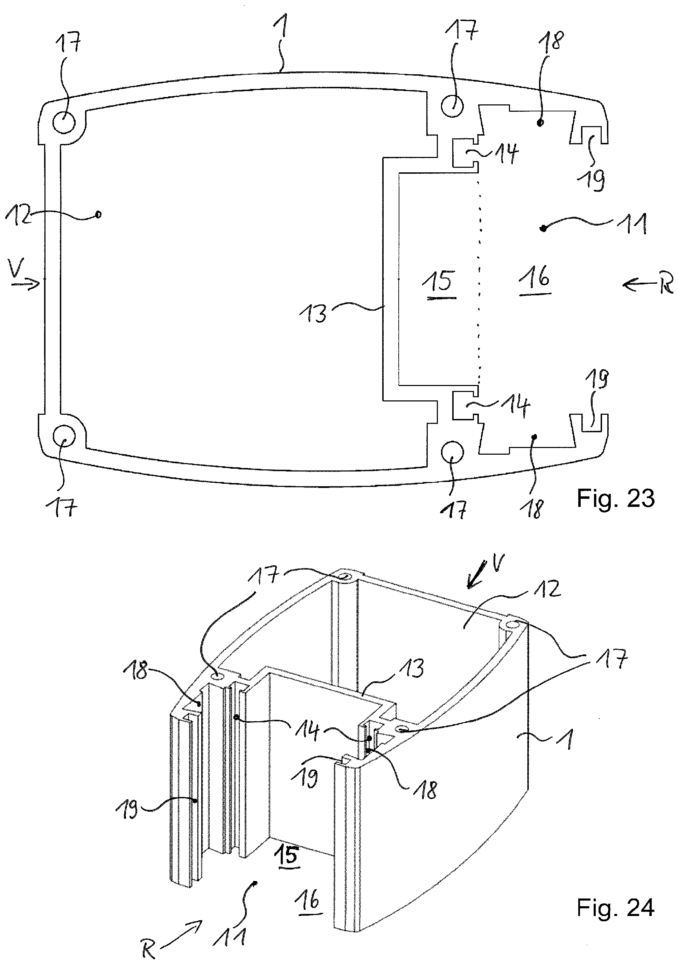

Die Figuren 23 bis 24 zeigen eine zweite Ausführungsform eines Profils der Tragsäule 1, das eine verlängerte vordere Kammer 12 aufweist. Das Profil ist im Bereich der hinteren Kammer 11 vergleichbar ausgebildet wie das anhand der Figuren 21 bis 22 beschriebene Profil.

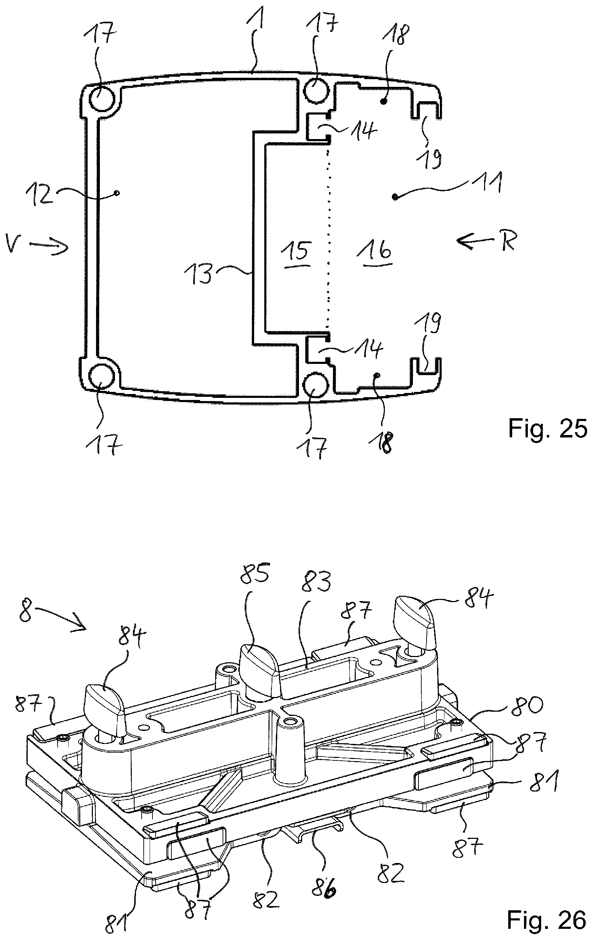

Die Figur 25 zeigt eine weitere Ausführungsform eines Profils der Tragsäule 1, das im Bereich der vorderen Kammer 12 im Wesentlichen der Ausführungsform der Figuren 21 bis 22 entspricht, aber Unterschiede im Bereich der hinteren Kammer 11 aufweist. So sind bei der Ausführungsform der Figur 25 die Führungsschienen 18 mit parallel verlaufenden Seitenwänden ausgebildet, d.h. nicht schwalbenschwanzförmig.

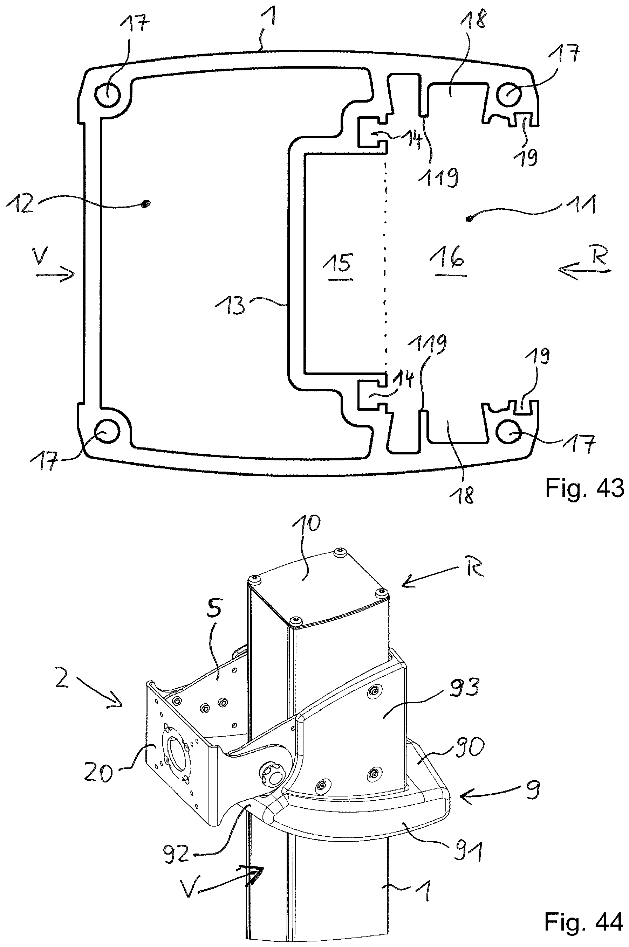

Die Figur 43 zeigt eine weitere Ausführungsform eines Profils der Tragsäule 1, das sich von der Ausführungsform der Figur 22 durch zusätzliche in den Aufnahmeraum 16 abragende Stege 119 unterscheidet. Die Stege 119 sind im Bereich der Führungsschienen 18 angeordnet. Die Stege 119 dienen zur zusätzlichen Führung und Klemmung des Sliders 8 innerhalb der Führungsschienen 18.

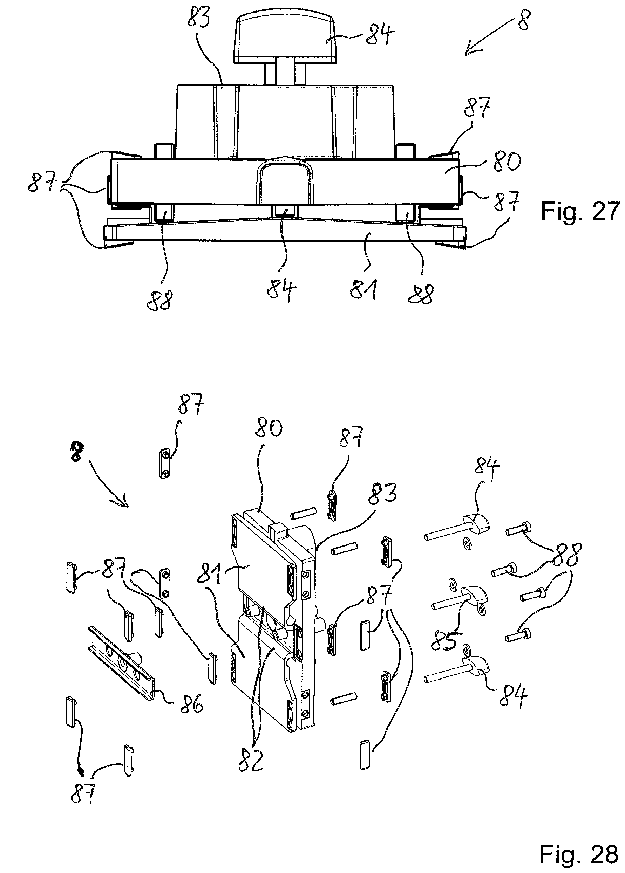

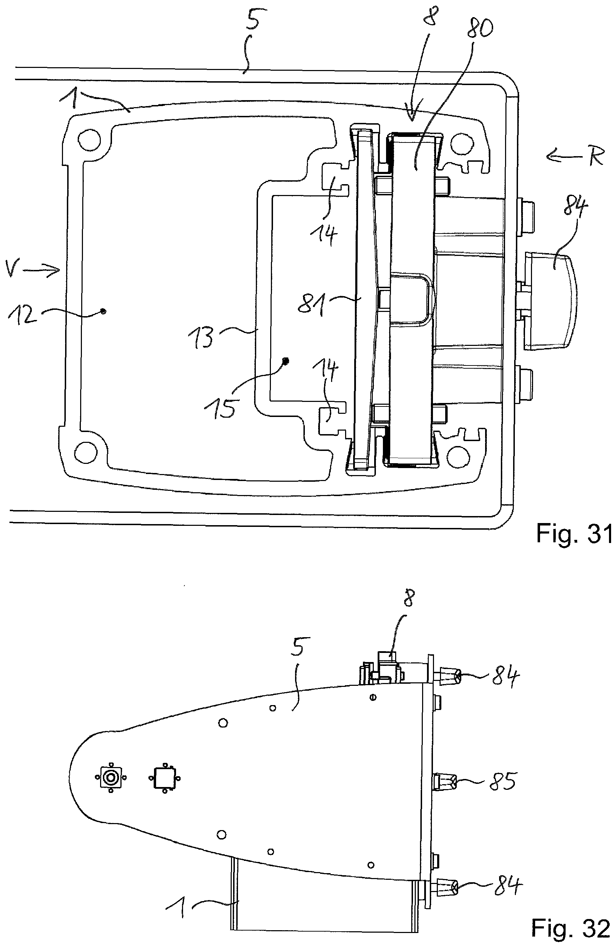

Innerhalb des Aufnahmeraums 16 des Profils der Tragsäule kann, wie erwähnt, ein Slider geleitend geführt werden. Dies wird nachfolgend anhand der Figuren 26 bis 32 näher erläutert. Die Figur 26 zeigt zunächst einen Slider 8 im zusammengebauten Zustand. Der Slider 8 weist einen Hauptkörper 80 auf, an dessen zur Rückseite R der Tragsäule weisenden Seite ist ein abragender Befestigungsbereich 83 angeformt ist, an dem die erste oder die zweite Halterung 5, 6 befestigt werden kann. Zur Befestigung der Halterung an dem Slider ist eine zentrale Befestigungsschraube 85 vorgesehen. Am oberen und unteren Ende des Sliders 8 sind weitere Schrauben 84 vorhanden, die als Klemmschrauben eines Klemm-Fixiermechanismus des Sliders 8 fungieren. Hierfür weist der Slider 8 auf der vom Befestigungsbereich 83 abgewandten Seite des Hauptkörpers 80 gelenkig (über Gelenke 82) mit dem Hauptkörper 80 verbundene verschwenkbare Klemmelemente 81 auf. Die Klemmelemente 81 sind beispielsweise über stoffschlüssige Gelenke 82 mit dem Hauptkörper 80 verbunden. Wird eine dem jeweiligen Klemmelement 81 zugeordnete Klemmschraube 84 festgezogen, so drückt diese gegen das jeweilige Klemmelement 81 und spreizt dieses etwas vom Hauptkörper 80 ab, so dass der Slider 8 innerhalb der Führungsschienen 18 festgeklemmt werden kann. Um eine für einen Gleiten entlang der Führungsschienen 18 mit geringem Kraftaufwand geeignete Grundeinstellung der Klemmelemente 81 zu gewährleisten, sind einstellbare Nulllageelemente 88 vorhanden, z.B. in Form von Schrauben, mit denen eine Nulllage (neutrale Lage) der Klemmelemente 81 voreingestellt werden kann.

Der Slider 8, insbesondere sein Hauptkörper 80 und die Klemmelemente 81, können z.B. aus Metall oder Kunststoff gefertigt sein. Um unabhängig von der sich ergebenden Materialpaarung zwischen dem Slider 8 und dem Material der Tragsäule 1 günstige Gleiteigenschaften innerhalb der Führungsschienen 18 zu gewährleisten, können an dem Slider 8 an verschiedenen äußeren Positionen Gleitelemente 87 eingeklipst oder auf andere Weise daran befestigt werden. Die Gleitelemente 87 können beispielsweise aus Teflon oder einem anderen geeigneten, reibungsarmen Material bestehen.

Erkennbar ist ferner ein auf der Seite der Klemmelemente 81 ungefähr an zentraler Stelle des Sliders angeordnetes rückwärtiges Halteelement 86, das als Gegenlager für die Halteschraube 85 sowie eine daran befestigte Halterung 5, 6 dient. Die erste oder die zweite Halterung 5, 6 wird somit über die Halteschraube 85 an dem Befestigungsbereich 83 befestigt. Dabei wird die Halteschraube 85 in ein Gewinde des rückwärtigen Halteelements 86 eingeschraubt.

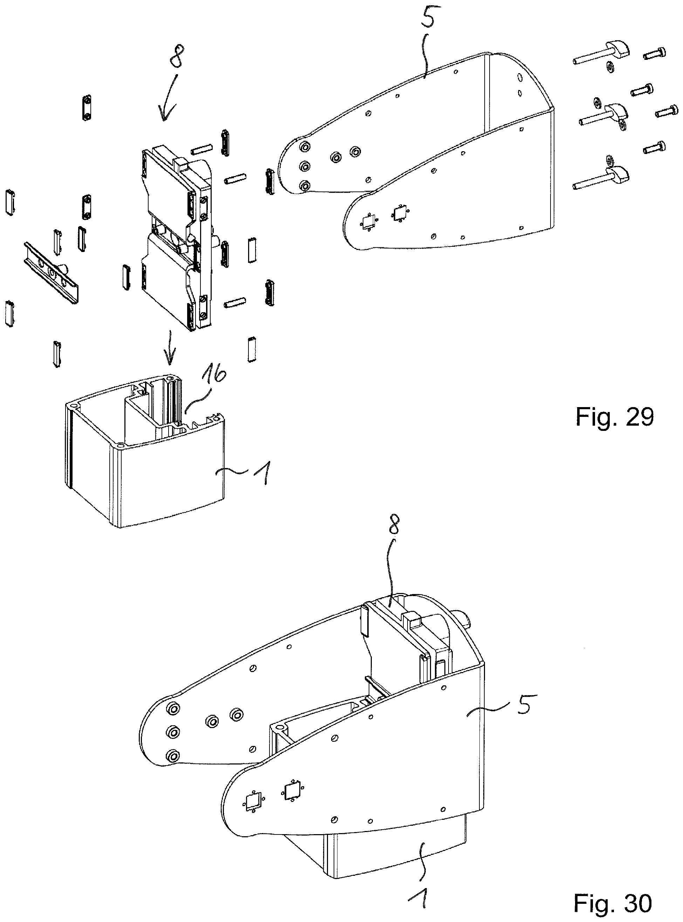

Wie die Figuren 30 bis 32 zeigen, kann die vormontierte Einheit aus der Halterung 5 und dem Slider 8 von oben oder unten, jedenfalls von einer offenen Seite der Tragsäule 1, in die hintere Kammer 11 und insbesondere in die Führungsschienen 18 eingeführt werden. Um den Slider 8 in einer gewünschten Vertikalposition zu fixieren, werden die beiden Klemmschrauben 84 festgezogen. Soll die Vertikalposition wieder geändert werden, müssen nur die Klemmschrauben 84 gelöst werden, die Vertikalposition geändert werden. Danach erfolgt eine erneute Klemm-Fixierung durch Festziehen der Klemmschrauben 84.

Um innerhalb des Kabelaufnahmeraums 15 in Längsrichtung der Tragsäule 1 geführte Kabel sicher in diesem Kabelaufnahmeraum 15 zu halten und insbesondere Konflikte bei einer Verstellung des Sliders 8 zu vermeiden, können an den Fixiereinrichtungen 14, z.B. über darin eingesetzte Federmuttern, an geeigneten Stellen querverlaufende Kabelhaltebleche angeordnet werden.

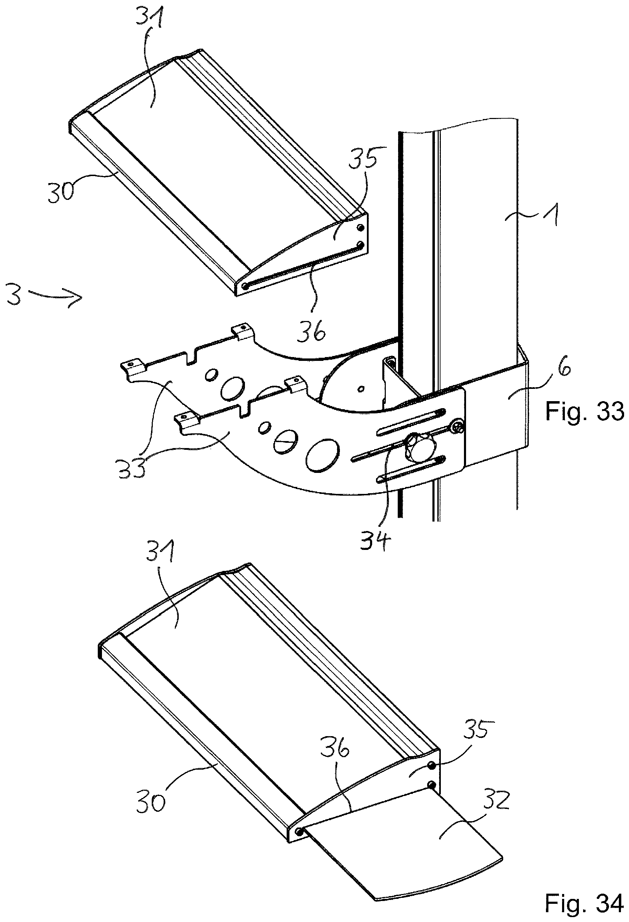

Die Figuren 33 bis 34 zeigen in vergrößerter Darstellung den Bereich der zweiten Trageinrichtung 3 der Tragsäule 1. Erkennbar ist insbesondere, dass die Verbindungselemente 33 durch Längsschlitze 34 längenverstellbar sein können, d.h. der Abstand der Tastaturauflage 30 zur Tragsäule 1 kann an den Bedarf angepasst werden. An der Tastaturablage 30 kann zusätzlich eine Abdeckklappe befestigt werden, die zum Abdecken der Tastatur zugeklappt werden kann. Auf diese Weise ist die Tastatur vor Umwelteinflüssen geschützt, wenn sie nicht betätigt wird. Die Tastaturauflage 30 kann insbesondere ein zentrales Strangpress-Profilbauteil mit der Auflagefläche 31 aufweisen, das seitlich durch Verschlussplatten 35 verschlossen ist. In einer oder in beiden der seitlichen Verschlussplatten 35 kann ein Schlitz 36 zur Durchführung des Mousepads 32 angeordnet sein.

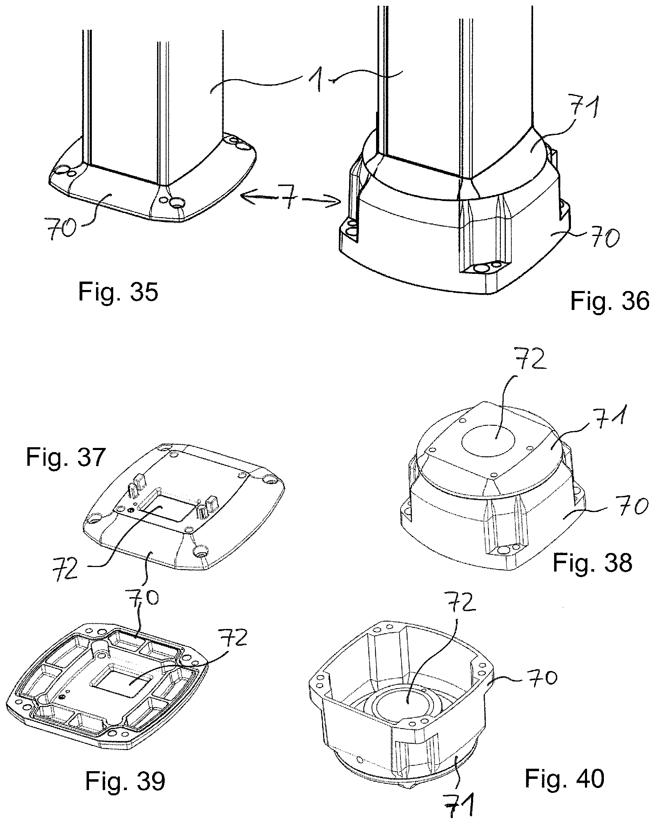

Die Figur 35 zeigt als Vertikalbefestigungsmittel 7 einen feststehenden Fuß 70 des Tragsäulensystems 100. Bei dem feststehenden Fuß 70, der über Befestigungslöcher mit dem Fußboden verschraubt wird, ist eine spätere Verstellung der Tragsäule 1 nicht möglich. Alternativ kann daher ein drehbarer Fuß 70 gemäß Figur 36 eingesetzt werden. Dieser verfügt über ein Drehgelenk 71, das eine Verdrehung der Tragsäule 1 um ihre Längsachse, d.h. um die Vertikalachse, ermöglicht.

Beide Ausführungsformen des Fußes 70 weisen einen Durchbruch 72 auf, der zur Durchführung von Kabeln dient. Die Kabel können beispielsweise in einem Kabelkanal oder im Fußboden weiter verlegt sein.

Über das Vertikalbefestigungsmittel 7 kann die Tragsäule 1 auch auf einem Rollwagen befestigt werden, so dass ein mobiles Tragsäulensystem 100 realisiert wird. Das Vertikalbefestigungsmittel 7 kann auch anstelle der Abschlussplatte 10 an der Oberseite der Tragsäule befestigt werden. Auf diese Weise kann die Tragsäule 1 an der Decke eines Raums oder an einem Tragbalken befestigt werden.

Das erfindungsgemäße Tragsäulensystem 100 kann durch ein zusätzliches Bauteil in Form einer Kabelführungseinrichtung 9 ergänzt werden, wie die Figuren 44 bis 47 zeigen. Die Kabelführungseinrichtung 9 dient zum Führen von Kabeln von der Rückseite R der Tragsäule 1 her zur Vorderseite V hin, z.B. Kabel des visuellen Ausgabegerätes, des manuellen Eingabegerätes oder sonstige Kabel der Computereinrichtung. Die Kabel können somit innerhalb der Tragsäule 1, insbesondere im Aufnahmeraum 16, geführt werden und in optisch angenehmer Weise aus der Tragsäule 1 heraus zur Vorderseite V hin zum entsprechenden Teil der Computereinrichtung geführt werden. Die Kabelführungseinrichtung 9 bildet dabei einen Kabelkanal. Die Kabel sind dabei weitgehend gekapselt, zumindest in optischer Hinsicht.

Die Kabelführungseinrichtung 9 kann aus zwei spiegelsymmetrisch zueinander ausgebildeten Teilen, die von links und rechts auf die Tragsäule 1 bzw. auf die erste Trageinrichtung 2 oder die zweite Trageinrichtung 3 aufgesetzt werden und miteinander verbunden werden. Jedes der spiegelsymmetrischen Teile kann einen rückwärtigen Kabelführungsabschnitt 90, einen seitlichen Kabelführungsabschnitt 91 und einen frontseitigen Kabelführungsabschnitt 92 aufweisen, die in dieser Reihenfolge hintereinander angeordnet sind, sodass Kabel durchgehend von dem rückwärtigen Kabelführungsabschnitt 90 durch den seitlichen Kabelführungsabschnitt 91 zum frontseitigen Kabelführungsabschnitt 92 hin geführt werden können.

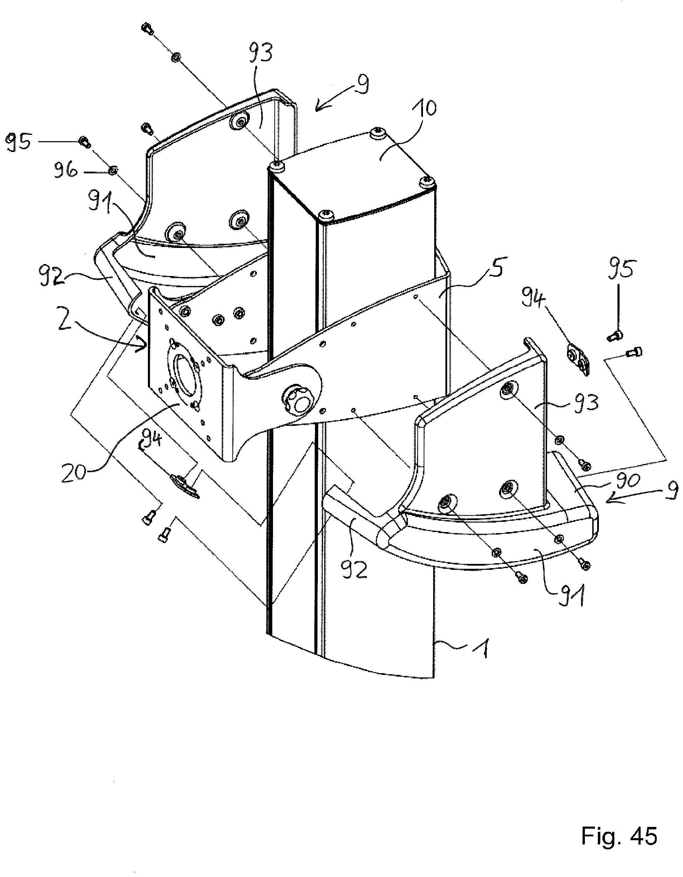

Zur Befestigung des jeweiligen Teils der Kabelführungseinrichtung an der Tragsäule 1 oder an der ersten oder der zweiten Trageinrichtung 2, 3 kann das jeweilige Teil eine Befestigungsfläche 93 aufweisen, in der z.B. Durchgangslöcher zum Durchführen von Schrauben vorhanden sind. Die Figur 44 zeigt die Anbringung der zuvor beschriebenen Kabelführungseinrichtung 9 an der ersten Trageinrichtung 2, und zwar in einer ersten Befestigungslage, in der die Kabelführungsabschnitte 90, 91, 92 unterhalb der Befestigungsfläche 93 angeordnet sind. Wie insbesondere durch die Darstellung in der Figur 45 deutlich wird, können die jeweiligen Hälften der Kabelführungseinrichtung 9 durch Verbindungsstücke 94, z.B. in Form von Verbindungsblechen, miteinander gekoppelt werden, sodass ihre Grenzflächen bündig aneinander anliegen. Die Verbindungsstücke 94 können z.B. durch Schrauben 95, z.B. in Verbindung mit Unterlegscheiben 96, an der ersten Trageinrichtung 2 befestigt werden. Die Verbindungsstücke 94 können über Schrauben 95 an den Teilen der Kabelführungseinrichtung 9 befestigt werden.

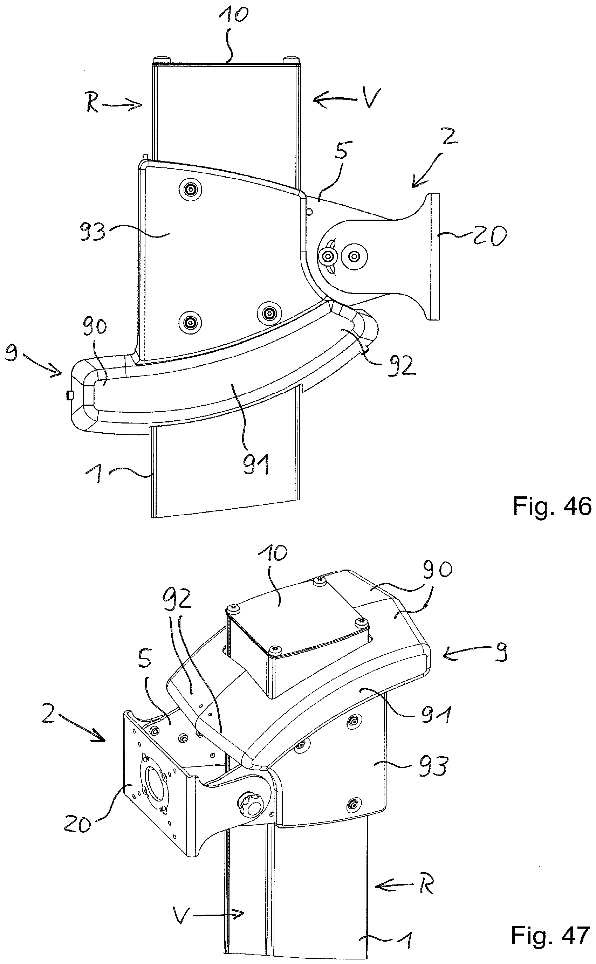

Die Figur 46 zeigt die Anordnung gemäß Figur 44 in einer Seitenansicht. Erkennbar ist insbesondere der geschwungene Verlauf des seitlichen Kabelführungsabschnitts 91.

Die Figur 47 zeigt, dass die Kabelführungseinrichtung 9 auch in einer zweiten Befestigungslage montiert werden kann, derart, dass die Befestigungsfläche 93 unterhalb der Kabelführungsabschnitte 90, 91, 92 angeordnet ist.

## Patentansprüche

1. Tragsäulensystem (100) zum Tragen wenigstens einer Computereinrichtung (101, 102), wobei das Tragsäulensystem folgendes aufweist:
a) wenigstens eine zur vertikalen Montage eingerichtete längliche Tragsäule (1),
b) wenigstens ein Vertikalbefestigungsmittel (7), das zur vertikalen Befestigung der Tragsäule (1) an einem Fußboden, einer Decke oder einer Wand eines Raum oder zur Befestigung an einer Rollenplattform eingerichtet ist,
c) wenigstens eine an der Tragsäule (1) befestigte erste Trageinrichtung (2) zum Tragen wenigstens eines visuellen Ausgabegeräts (101) der Computereinrichtung,
d) wenigstens eine an der Tragsäule (1) befestigte zweite Trageinrichtung (3) zum Tragen wenigstens eines manuellen Eingabegeräts (102) der Computereinrichtung,
wobei die Tragsäule (1) wenigstens einen Durchbruch in einer von außen zugänglichen Wand aufweist und durch den Durchbruch wenigstens ein Funktionselement (40) hindurch geführt ist, wobei wenigstens eine Funktionsblende (4) in oder an dem Durchbruch befestigt ist und den Durchbruch abdeckt und das wenigstens eine Funktionselement (40) über die wenigstens eine Funktionsblende (4) in abgedichteter Weise durch den Durchbruch hindurch geführt ist, **dadurch gekennzeichnet, dass** die Funktionsblende (4) wenigstens eine schräg zur Längsachse der Tragsäule (1) verlaufende Durchführungswand (44) zur Durchführung eines Kabels oder mehrere zickzackförmig schräg angeordnete Durchführungswände (44) aufweist.

2. Tragsäulensystem nach dem vorhergehenden Anspruch, **dadurch gekennzeichnet, dass** die Funktionsblende (4) an einer Vorderseite (V) oder einer Rückseite (R) der Tragsäule (1) angeordnet ist.

3. Tragsäulensystem nach einem der vorhergehenden Ansprüche, **dadurch gekennzeichnet, dass** die Funktionsblende (4) einen Befestigungsrahmen (42) aufweist, der hinsichtlich seiner Dimensionen an die Dimensionen des Durchbruchs angepasst ist.

4. Tragsäulensystem nach einem der vorhergehenden Ansprüche, **dadurch gekennzeichnet, dass** die Tragsäule (1) vollständig oder überwiegend aus Metall besteht.

5. Tragsäulensystem nach einem der vorhergehenden Ansprüche, **dadurch gekennzeichnet, dass** die Funktionsblende (4) vollständig oder überwiegend aus Kunststoff besteht.

6. Tragsäulensystem nach einem der vorhergehenden Ansprüche, **dadurch gekennzeichnet, dass** die erste und/oder die zweite Trageinrichtung (2, 3) wenigstens einen Konzepthalter aufweist.

7. Tragsäulensystem nach einem der vorhergehenden Ansprüche, **dadurch gekennzeichnet, dass** als Funktionselement (40) ein Not-Aus-Betätigungselement der Computereinrichtung oder einer mit der Computereinrichtung verbundenen Anlage an der Funktionsblende (4) angeordnet ist.

8. Tragsäulensystem nach einem der vorhergehenden Ansprüche, **dadurch gekennzeichnet, dass** die zweite Trageinrichtung (3) ein Strangpress-Profilbauteil mit einer Auflagefläche (31) für das manuelle Eingabegerät der Computereinrichtung aufweist, wobei das Strangpress-Profilbauteil seitlich durch Verschlussplatten (35) verschlossen ist.

9. Tragsäulensystem nach einem der vorhergehenden Ansprüche, **dadurch gekennzeichnet, dass** in der zweiten Trageinrichtung (3) ein ausziehbares und einschiebbares Mousepad (32) integriert ist.

10. Tragsäulensystem nach einem der vorhergehenden Ansprüche, **dadurch gekennzeichnet, dass** an der Tragsäule (1) zusätzlich zum visuellen Ausgabegerät (101) der Computereinrichtung eine Signalleuchte befestigt ist.

11. Tragsäulensystem nach einem der vorhergehenden Ansprüche, **dadurch gekennzeichnet, dass** ein Faltenbalg (21) einerseits mit einem Durchbruch an einer Außenwand der Tragsäule (1) und andererseits mit der ersten oder der zweiten Trageinrichtung (2, 3) oder der ersten oder der zweiten Halterung (5, 6) gekoppelt ist.

12. Tragsäulensystem nach einem der vorhergehenden Ansprüche, **dadurch gekennzeichnet, dass** das Tragsäulensystem (100) eine Kabelführungseinrichtung (9) aufweist, die mehrere Kabelführungsabschnitte (90, 91, 92) aufweist, die seitlich um die Tragsäule (1) herum von der Rückseite (R) bis zur Vorderseite (V) der Tragsäule (1) reichen.

## Claims

1. Support column system (100) for supporting at least one computer installation (101, 102), wherein the support column system comprises the following:
a) at least one elongate support column (1) which is arranged for vertical fitting;
b) at least one vertical fastening means (7) which is arranged for fastening the support column (1) vertically to a floor, a ceiling, or a wall of a room, or for fastening said support column (1) to a roller platform;
c) at least one first support installation (2) that is fastened to the support column (1), for supporting at least one visual output device (101) of the computer installation;
d) at least one second support installation (3) that is fastened to the support column (1), for supporting at least one manual input device (102) of the computer installation;
wherein the support column (1) has at least one cut-out in an externally accessible wall, and at least one functional element (40) is routed through the cut-out, wherein at least one functional cover plate (4) is fastened in or on the cut-out and covers the cut-out, and the at least one functional element (40) by way of the at least one functional cover plate (4) is routed through the cut-out in a sealed manner, **characterized in that** the functional cover plate (4) has at least one conduit wall (44), running obliquely to the longitudinal axis of the support column (1), for routing a cable, or a plurality of conduit walls (44) that are disposed in an oblique staggered manner.

2. Support column system according to the preceding claim, **characterized in that** the functional cover plate (4) is disposed on a front side (V) or a rear side (R) of the support column (1).

3. Support column system according to one of the preceding claims, **characterized in that** the functional cover plate (4) has a fastening frame (42) which in terms of the dimensions thereof is adapted to the dimensions of the cut-out.

4. Support column system according to one of the preceding claims, **characterized in that** the support column (1) is composed entirely or largely of metal.

5. Support column system according to one of the preceding claims, **characterized in that** the functional cover plate (4) is composed entirely or largely of plastics.

6. Support column system according to one of the preceding claims, **characterized in that** the first and/or the second support installation (2, 3) have/has at least one document stand.

7. Support column system according to one of the preceding claims, **characterized in that** an emergency shut-off activation element of the computer installation or of a system that is connected to the computer installation is disposed as the functional element (40) on the functional cover plate (4).

8. Support column system according to one of the preceding claims, **characterized in that** the second support installation (3) has a profiled extrusion having a bearing face (31) for the manual input device of the computer installation, wherein the profiled extrusion is laterally closed by closure plates (35).

9. Support column system according to one of the preceding claims, **characterized in that** a deployable and stowable mousepad (32) is integrated in the second support installation (3).

10. Support column system according to one of the preceding claims, **characterized in that**, additionally to the visual output device (101) of the computer installation, a signal lamp is fastened to the support column (1).

11. Support column system according to one of the preceding claims, **characterized in that** a bellows (21) is coupled to a cut-out on an external wall of the support column (1), on the one hand, and to the first or the second support installation (2, 3) or to the first or the second mounting (5, 6), on the other hand.

12. Support column system according to one of the preceding claims, **characterized in that** the support column system (100) has a cable routing installation (9) which has a plurality of cable routing portions (90, 91, 92) which reach laterally around the support column (1), from the rear side (R) to the front side (V) of the support column (1).

## Revendications

1. Système de colonnes de support (100) pour supporter au moins un ordinateur (101, 102), le système de colonnes de support présentant :
a) au moins une colonne de support allongée (1) prévue pour un montage vertical,
b) au moins un moyen de fixation vertical (7) qui est prévu pour la fixation verticale de la colonne de support (1) à un plancher, un plafond ou un mur d'une pièce ou pour la fixation à une plate-forme à rouleaux,
c) au moins un premier dispositif de support (2) fixé à la colonne de support (1) pour supporter au moins un périphérique de sortie visuel (101) de l'ordinateur,
d) au moins un deuxième dispositif de support (3) fixé à la colonne de support (1) pour supporter au moins un appareil de saisie manuelle (102) de l'ordinateur,
la colonne de support (1) présentant au moins un orifice dans une paroi accessible depuis l'extérieur et au moins un élément fonctionnel (40) étant guidé à travers l'orifice, au moins un bandeau fonctionnel (4) étant fixé dans ou sur l'orifice et couvrant l'orifice et l'au moins un élément fonctionnel (40) étant guidé par le biais de l'au moins un bandeau fonctionnel (4) de manière hermétique à travers l'orifice, **caractérisé en ce que** le bandeau fonctionnel (4) présente au moins une paroi de passage (44) s'étendant obliquement par rapport à l'axe longitudinal de la colonne de support (1) pour le passage d'un câble ou présente plusieurs parois de passage (44) disposées obliquement en zigzag.

2. Système de colonnes de support selon la revendication précédente, **caractérisé en ce que** le bandeau fonctionnel (4) est disposé au niveau d'un côté avant (V) ou d'un côté arrière (R) de la colonne de support (1).

3. Système de colonnes de support selon l'une quelconque des revendications précédentes, **caractérisé en ce que** le bandeau fonctionnel (4) présente un cadre de fixation (42) dont les dimensions sont adaptées aux dimensions de l'orifice.

4. Système de colonnes de support selon l'une quelconque des revendications précédentes, **caractérisé en ce que** la colonne de support (1) se compose complètement ou essentiellement de métal.

5. Système de colonnes de support selon l'une quelconque des revendications précédentes, **caractérisé en ce que** le bandeau fonctionnel (4) se compose complètement ou essentiellement de plastique.

6. Système de colonnes de support selon l'une quelconque des revendications précédentes, **caractérisé en ce que** le premier et/ou le deuxième dispositif de support (2, 3) présentent au moins un porte-copie.

7. Système de colonnes de support selon l'une quelconque des revendications précédentes, **caractérisé en ce qu'**un élément de commande d'arrêt d'urgence de l'ordinateur ou d'une installation associée à l'ordinateur est disposé sur le bandeau fonctionnel (4) en tant qu'élément fonctionnel (40).

8. Système de colonnes de support selon l'une quelconque des revendications précédentes, **caractérisé en ce que** le deuxième dispositif de support (3) présente un composant profilé extrudé avec une surface d'appui (31) pour l'appareil de saisie manuelle de l'ordinateur, le composant profilé extrudé étant fermé latéralement par des plaques de fermeture (35).

9. Système de colonnes de support selon l'une quelconque des revendications précédentes, **caractérisé en ce que** dans le deuxième dispositif de support (3) est intégré un tapis de souris (32) pouvant être sorti et rentré.

10. Système de colonnes de support selon l'une quelconque des revendications précédentes, **caractérisé en ce qu'**un voyant de signalisation est fixé sur la colonne de support (1) en plus du périphérique de sortie visuelle (101) de l'ordinateur.

11. Système de colonnes de support selon l'une quelconque des revendications précédentes, **caractérisé en ce qu'**un soufflet (21) est accouplé d'une part à un orifice au niveau d'une paroi extérieure de la colonne de support (1) et d'autre part au premier ou au deuxième dispositif de support (2, 3) ou à la première ou à la deuxième fixation (5, 6).

12. Système de colonnes de support selon l'une quelconque des revendications précédentes, **caractérisé en ce que** le système de colonnes de support (100) présente un dispositif de guidage de câbles (9) qui présente plusieurs portions de guidage de câbles (90, 91, 92) qui s'étendent latéralement autour de la colonne de support (1) depuis le côté arrière (R) jusqu'au côté avant (V) de la colonne de support (1).
